# EUROPEAN PATENT SPECIFICATION

(11) **EP 2 876 956 B1**
(45) Date of publication and mention of the grant of the patent: **06.11.2019**
(21) Application number: 12882933.0
(22) Date of filing: 17.08.2012
(51) Int. Cl.: H04W 72/04, H04W 92/20

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(43) Date of publication of application: 27.05.2015
(73) Proprietor: Huawei Technologies Co., Ltd., Longgang District Shenzhen, Guangdong 518129 (CN)
(72) Inventor: MAZZARESE, David, Shenzhen Guangdong 518129 (CN); ZHOU, Mingyu, Shenzhen Guangdong 518129 (CN); LIN, Bo, Shenzhen Guangdong 518129 (CN); BI, Hao, Shenzhen Guangdong 518129 (CN); WANG, Yan, Shenzhen Guangdong 518129 (CN)
(74) Representative: Körber, Martin Hans
(86) International application number: PCT/CN2012/080311
(87) International publication number: WO 2014/026382

(56) References cited:
- WO-A1-2011/100492
- WO-A1-2011/116240
- CN-A- 101 827 392
- CN-A- 101 909 321
- CN-A- 102 457 434
- US-A1- 2010 067 604
- US-A1- 2011 028 146
- US-A1- 2011 294 527
- US-A1- 2012 155 366

## Description

### TECHNICAL FIELD

The prevent invention relates to the field of wireless communication, in particular to a method and device for sending data.

### BACKGROUND

In the prior art, one user equipment (user equipment, UE) generally communicates with only one network equipment. Specifically, the UE detects control signaling sent by the network equipment and receives downlink data signals sent by the network equipment according to the detected control signaling.

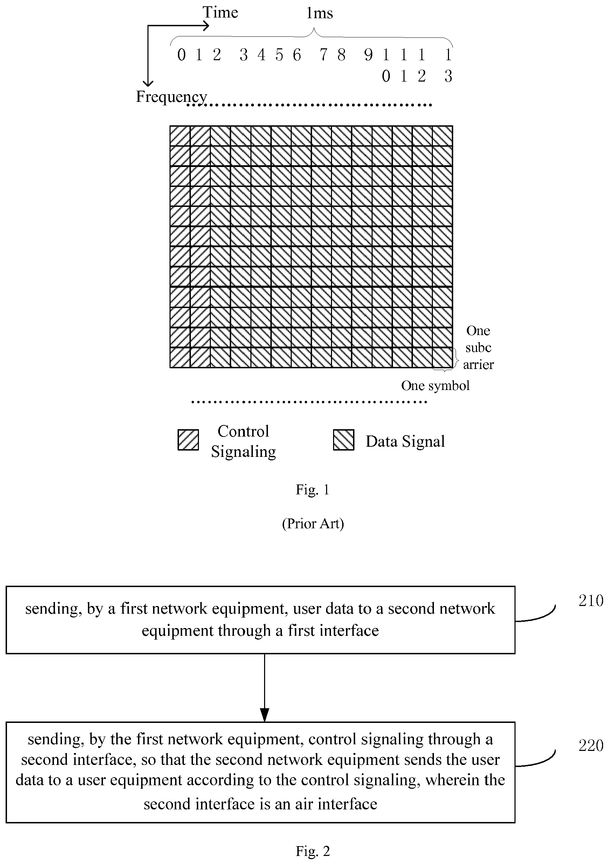

As shown in Fig.1, in a long term evolution (long term evolution, LTE) system, the time length of one transmission time interval (transmission time interval, TTI) is 1ms. One TTI comprises 14 symbols; and a network equipment sends control signaling for scheduling resource of downlink data signals to a UE on the first i symbols of the nth TTI and sends the downlink data signals to the UE on other symbols of the TTI, wherein i is equal to 2 as shown in Fig.1, and i can also be another value. In this way, after determining a downlink scheduling scheme for the UE, the network equipment can quickly send the downlink data signals to the UE, so that the scheduling scheme can timely adapt to quick changes of a channel. The downlink scheduling scheme, for example, can comprise frequency resources distributed to the UE by the network equipment, a modulation and coding scheme (modulation and coding scheme, MCS) and the like.

With the development of the communication technology, a communication scene appears. In the communication scene, the network equipment for sending control signaling to a UE is different from the network equipment for sending downlink data signals to the UE. In this way, complex scheduling functions can be unified to one network equipment for sending the control signaling to the UE, and the network equipment for sending the downlink data signals to the UE can only have the function of sending the downlink data signals rather than the function of sending the control signaling to the UE, so that quick decision of scheduling, simple coordination between network equipments and simple design between network equipments are facilitated.

Moreover, a coordinated multiple point transmission/reception (coordinated multiple point transmission/reception, CoMP) technology is provided. Namely, multiple network equipments can serve the UE in a coordinated mode, so that the system performance is enhanced. In order to avoid the increase of complexity caused by the situation that the UE detects the control signaling sent by multiple network equipments, each UE fixedly detects the control signaling sent by one network equipment and receives the downlink data signals sent by the network equipment and other network equipments in a coordinated mode according to the detected control signaling, wherein the coordinated mode is not limited and can be dynamic point selection (dynamic point selection, DPS) or joint transmission (joint transmission, JT). The DPS means dynamically selecting one of the multiple network equipments to send downlink data signals to the UE; and the JT means that multiple network equipments send downlink data signals to the UE in a joint mode.

In the prior art, the connection between different network equipments is named as backhaul, generally, which is a wired interface. For example, in the LTE system, the different network equipments are connected through an X2 interface and exchange information through the X2 interface. The X2 interface has the defect that the information exchange has a great delay which generally reaches more than 10ms. In this way, after a first network equipment determines the scheduling scheme of a certain UE, a second network equipment designated to send downlink data signals to the UE cannot receive the control signaling and acquire the scheduling scheme until a long time passes, and the second network equipment cannot send the downlink data signals to the UE until the control signaling is received, so that the information exchange delay between the network equipments in the prior art is longer. Moreover, timely scheduling cannot be realized according to the changes of a channel in the prior art, and the efficiency of a system is lower.

In addition, WO 2011/116240 A1 relates to a method for best-effort radio backhaul among cells on unlicensed or shared spectrum.

### SUMMARY

In view of this, the embodiments of the present invention provides a method and a device for sending data, and a system so as to solve the problem of longer information exchange delay in the prior art.

At the first aspect, a method for sending data is provided. The method comprises:
receiving, by a second network equipment, user data sent by a first network equipment through a first interface, wherein a connection between the first network equipment and the second network equipment is backhaul, and the connection is used for user data transmission on the first interface;
receiving, by the second network equipment, control signaling sent by the first network equipment through a second interface, wherein the second interface is an air interface; and
sending, by the second network equipment, the user data to a user equipment according to the control signaling, wherein the control signaling is also received by the UE through the second interface, and the control signaling is used for scheduling a resource for carrying the user data.

In the second aspect, a network equipment is provided. The network equipment is a second network equipment, and comprises:
a first interface and a second interface, wherein the second interface is an air interface;
a receiving module, adapted to receive user data sent by a first network equipment through the first interface and receive control signaling sent by the first network equipment through the second interface to the second network equipment and a user equipment, wherein a connection between the first network equipment and the second network equipment is backhaul, wherein the connection is used for user data transmission on the first interface, wherein the control signaling is used for scheduling a resource, and the resource is used for bearing the user data sent to a user equipment;
a data processing module, adapted to acquire the control signaling received by the receiving module and instruct a sending module to send the user data received by the receiving module; and
the sending module, adapted to send the user data to the user equipment on the resource scheduled by the control signaling.

At the third aspect, a system comprising a user equipment, a first network equipment and a second network equipment according to the second aspect are provided. The user equipment comprises:
a controlling module, adapted to control a receiving module to receive control signaling at a first time period and control the receiving module to receive user data at a second time period; and
the receiving module, adapted to receive the control signaling sent by a first network equipment at the first time period and receive the user data sent by a second network equipment at the second time period according to the control signaling, wherein the first time period and the second time period are discontinuous.

Further embodiments are disclosed in the dependent claims.

The first network equipment can send the control signaling to the UE and the second network equipment through the air interface, and does not send the control signaling and the data signaling to the second network equipment through the same X2 interface, so that the first interface with longer transmission delay is prevented from being used for sending the control signaling, and the transmission delay of the control signaling between the network equipments is shortened.

### BRIEF DESCRIPTION OF DRAWINGS

To illustrate the technical solutions in the embodiments of the present invention more clearly, a brief introduction to the accompanying drawings required in the description of the prior art or the embodiments of the present invention will be given below. Apparently, the accompanying drawings described below are merely some embodiments of the present invention, and based on which other drawings could be obtained by those skilled in the art.
Fig.1 is a structural schematic view illustrating a frame for sending control signaling and data signals in the prior art;
Fig.2 is a flowchart illustrating a data sending method provided in an embodiment of the present invention;
Fig.3 is a flowchart illustrating a data sending method provided in another embodiment of the present invention;
Fig.4 is a flowchart illustrating a data receiving method provided in an embodiment of the present invention;
Fig.5 is a flowchart illustrating a data sending method provided in yet another embodiment of the present invention;
Fig.5a is a flowchart illustrating an implementation of step 501 in Fig.5;
Fig.5b is a flowchart illustrating another implementation of step 501 in Fig.5;
Fig.6 is a structural schematic view illustrating a frame for sending control signaling and data signals in an embodiment of the present invention;
Fig.7 is a structural schematic view illustrating a frame for sending control signaling and data signals in another embodiment of the present invention;
Fig.8 is a structural schematic view illustrating a network equipment provided in an embodiment of the present invention;
Fig.9 is a structural schematic view illustrating a network equipment provided in another embodiment of the present invention;
Fig.10 is a structural schematic view illustrating a user equipment provided in an embodiment of the present invention;
Fig.11 is a structural schematic view illustrating a network equipment provided in yet another embodiment of the present invention;
Fig. 12 is a structural schematic view illustrating a network equipment provided in still yet another embodiment of the present invention;
Fig. 13 is a structural schematic view illustrating a user equipment provided in another embodiment of the present invention;
Fig. 14 is a schematic view illustrating transmission of control signaling and user data in an application example of the present invention.

### DESCRIPTION OF EMBODIMENTS

The invention is defined in the appended claims. To make objectives, technical solutions and advantages of embodiments of the present invention more clearly, exemplary aspects/embodiments will be given below, in combination with the accompanying drawings. Apparently, the embodiments described below are a part, but not all, of the embodiments of the present invention. All of other embodiments, obtained by those skilled in the art based on the embodiments of the present invention without any inventive efforts, fall into the protection scope of the present invention.

An embodiment of the present invention provides a data sending method, which can transmit control signaling through an air interface so as to shorten the transmission delay of the control signaling between network equipments, and can transmit data signals through a first interface so as to avoid transmitting excessive information through the air interface and thus reduce the complexity of acquiring the data signals by the network equipment.

The embodiments are introduced in details below in conjunction with the drawings. It shall be noted that the embodiments of the present invention and the characteristics in the embodiments can be mutually and randomly combined in case of no conflict.

An embodiment provides a method for sending data. As shown in Fig.2, the method comprises the following steps:
step 210, a first network equipment sends user data to a second network equipment through a first interface;
step 220, the first network equipment sends control signaling through a second interface, so that the second network equipment sends the user data to a user equipment according to the control signaling, wherein the second interface is an air interface.

In the embodiment of the present invention, the user data means data transmitted through a traffic channel, such as data transmitted through a physical downlink shared channel (PDSCH) in a long term evolution (LTE) system. The control signaling is a signaling for scheduling the user data sent to the user equipment, such as a PDCCH in the LTE system. Wherein, the embodiment of the present invention does not limit the specific method for scheduling the user data. For example, the method can comprise the operations of coding and modulating user bit data acquired from the first network equipment and the like, or directly forwarding the user data acquired from the first network equipment, and any method for scheduling the user data can be applied to the embodiment of the present invention. Wherein, because the control signaling is sent by the first network equipment through the air interface, both the second network equipment and the UE can receive the control signaling. The control signaling is used for scheduling a resource, and the resource is used for bearing the user data, so that the UE can acquire the resource according to the control signaling and receive the user data borne by the resource.

The second interface is an air interface, wherein the air interface represents a wireless transmission mode supporting a certain transmission standard, for example, the transmission standard is the 3rd generation partnership project (3GPP) LTE, LTE Advanced of the 3GPP LTE, worldwide interoperability for microwave access (WiMAX), IEEE 802.11 or the like.

The first interface is different from the second interface, wherein the first interface can be the wireless transmission mode supporting one of the aforementioned transmission standards, and can also be an interface for wireless transmission via microwave, an interface for wired connection or the like. Wherein the interface for wireless transmission via microwave does not have a transmission standard, and the first network equipment can directly send the user data to the second network equipment through such first interface. As aforementioned, in the prior art, the control signaling and the user data are transmitted between network equipments through the same interface, and the interface can be an X2 interface for transmitting the control signaling and the user data between the network equipments in the prior art. The aforementioned descriptions of the user data, the control signaling, the first interface and the second interface are also applicable to other embodiments of the present invention, and are not described hereinafter.

In all the embodiments of the present invention, the network equipment can be a base station (BS), an access point (AP), a remote radio equipment (RRE), a remote radio head (RRH), a remote radio unit (RRU), a relay node or the like. The relationship between the network equipments and cells is not limited, one network equipment can correspond to one or more cells, and one cell can also correspond to one or more network equipments.

Wherein, the first network equipment and the second network equipment can be the same network equipment or different network equipment, and can be any combination of the aforementioned network equipments.

Through the embodiment, the first network equipment can send the control signaling to the UE and the second network equipment through the air interface, and does not transmit the control signaling and data signaling to the second network equipment through the same X2 interface, so that the first interface with longer transmission delay is prevented from being used for transmitting the control signaling, and the transmission delay of the control signaling between the network equipments is shortened. By transmitting the user data through the first interface, excessive information can be prevented from being transmitted through the air interface, so that the complexity of acquiring the user data through the air interface by the network equipment is reduced.

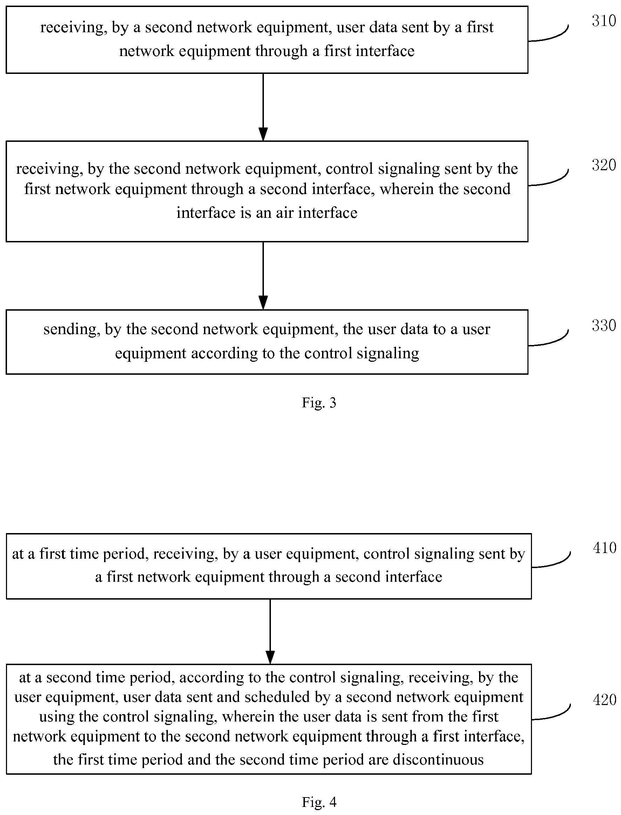

Another embodiment provides a method for sending data. As shown in Fig.3, the method comprises the following steps:
step 310, a second network equipment receives user data sent by a first network equipment through a first interface;
step 320, the second network equipment receives control signaling sent by the first network equipment through a second interface, wherein the second interface is an air interface;
step 330, the second network equipment sends the user data to a user equipment according to the control signaling.

Through the present embodiment, the second network equipment can receive the control signaling sent by the first network equipment through the air interface, so that the first interface with longer transmission delay is prevented from being used for transmitting the control signaling, and the transmission delay of the control signaling between the network equipments is shortened. By transmitting the user data through the first interface, excessive information can be prevented from being transmitted through the air interface, so that the complexity of acquiring the user data through the air interface by the network equipment is reduced.

Another embodiment provides a method for receiving data. As shown in Fig.4, the method comprises the following steps:
step 410, at a first time period, a user equipment receives control signaling sent by a first network equipment;
step 420, at a second time period, according to the control signaling, the user equipment receives user data sent by a second network equipment according to the control signaling, wherein the first time period and the second time period are discontinuous.

In the step 420, the user data is received from the first network equipment by the second network equipment through the first interface.

Through the embodiment, the user equipment can receive the control signaling sent by the first network equipment and the user data sent by the second network equipment at two discontinuous time periods, so that the second network equipment has enough time for scheduling the user data. Moreover, the user data is sent from the first network equipment to the second network equipment through the first interface. Alternatively, the control signaling is received from the first network equipment by the second network equipment through the second interface (the air interface), so that the first interface with longer transmission delay is prevented from being used for transmitting the control signaling, and the transmission delay of the control signaling between the network equipments is shortened.

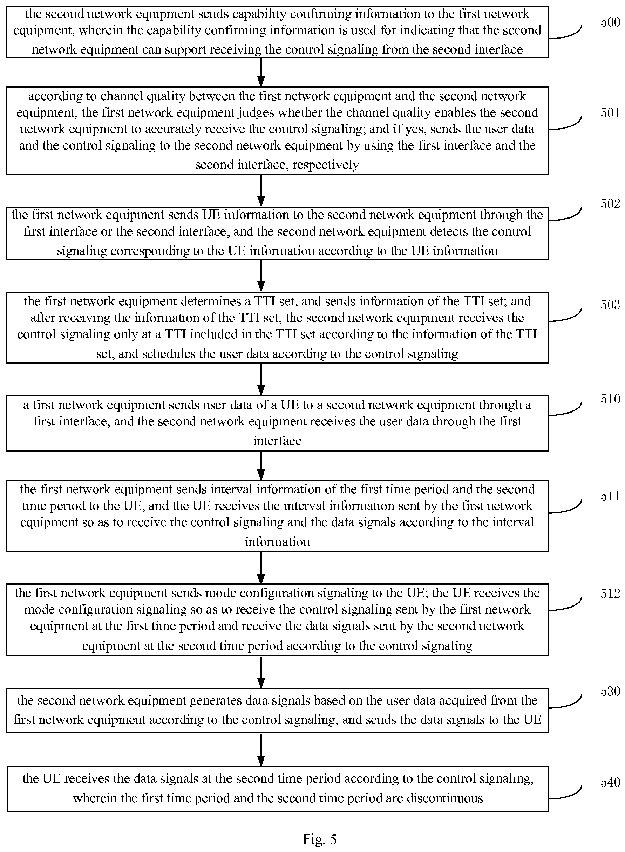

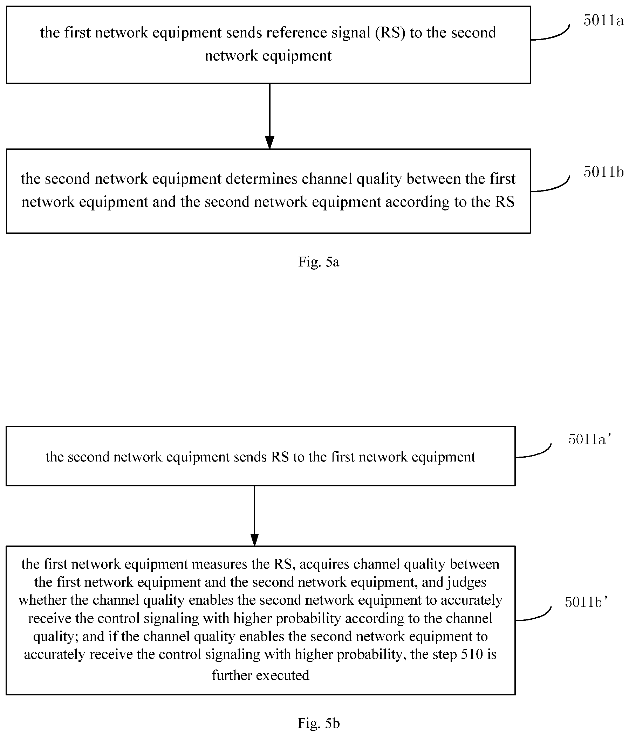

Another embodiment of the present invention provides a method for sending data. As shown in Fig.5, the method comprises the following steps:
step 510, a first network equipment sends user data of a UE to a second network equipment through a first interface, and the second network equipment receives the user data through the first interface;
step 520, the first network equipment sends control signaling through a second interface, the second network equipment receives the control signaling through the second interface, and the UE receives the control signaling at a first time period, wherein the second interface is an air interface;
step 530, the second network equipment generates data signals based on the user data acquired from the first network equipment according to the control signaling, and sends the data signals to the UE.

Wherein, the second network equipment can send the data signals to the user equipment through an air interface, the air interface supports the same transmission standard as the second interface, for example, both the two interfaces have the transmission mode supporting the 3GPP LTE standard, so that the UE can acquire the control signaling and acquire the data signals according to the control signaling through the same interface.

In this step, when the second network equipment schedules the user data acquired from the first network equipment according to the control signaling, the embodiment of the present invention does not limit the specific method for scheduling the user data. For example, the method can comprise the operations of coding and modulating user bit data acquired from the first network equipment and the like, or directly forwarding the user data acquired from the first network equipment, and any method for scheduling the user data can be applied to the embodiments of the present invention and is not described herein.

It shall be noted that, in all the embodiments of the present invention, the user data means data sent through a traffic channel, such as data sent through a physical downlink shared channel (PDSCH) in an LTE system. The control signaling, such as a physical downlink control channel (PDCCH) in the LTE system, is a signaling for scheduling the user data sent to the user equipment.

Further, the step 530 can comprise:
after receiving the control signaling, the second network equipment determines user data corresponding to UE information according to the UE information in the control signaling, schedules the user data acquired from the first network equipment according to the control signaling, and sends data signals generated by using the user data to the UE.

Wherein, when the first network equipment sends the control signaling, the UE information will be loaded in the control signaling, so that the second network equipment and the UE can acquire the corresponding control signaling.

Moreover, the second network equipment may receive the user data of multiple UEs. In this way, the second network equipment will determine the user data corresponding to UE information according to the UE information in the control signaling, and thus schedule the corresponding user data. For example, the first network equipment sends user data of two UEs to the second network equipment in advance, and loads radio network temporary identity (RNTI) information of the UE1 in the control signaling; and after receiving the control signaling sent by the first network equipment, the second network equipment detects and learns the RNTI of the UE1 included in the control signaling, determines the user data corresponding to the UE1 from the user data of the two UEs, and then sends the generated data signals after processing.

Wherein, the first network equipment can send the user data to the second network equipment at the (n-M)^{th} TTI and send the control signaling at the n^{th} TTI, wherein M is a positive integer and is more than or equal to 1 and less than or equal to 12, and n is an integer.

The first network equipment sends the user data to the second network equipment ahead of the control signaling, so that if the transmission delay of the first network equipment and the second network equipment is less than M TTIs, the second network equipment can acquire the user data ahead of the n^{th} TTI and receive the control signaling sent by the first network equipment at the n^{th} TTI.

Further, if the first interface is an X2 interface, preferably, M is more than 10.

For example, in the LTE system, the first interface is the X2 interface. And generally, the delay of sending information to the second network equipment through the X2 interface by the first network equipment is more than 10ms (namely 10 TTIs), so M is more than 10 to satisfy the communication of the X2 interface.

Step 540, the UE receives the data signals at the second time period according to the control signaling, wherein the first time period and the second time period are discontinuous.

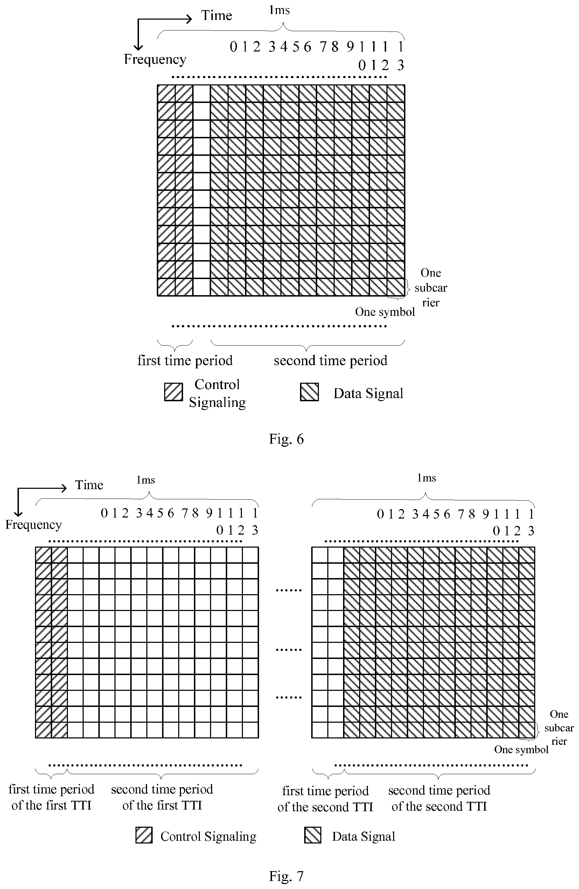

In an implementation, the first time period and the second time period are in the same TTI, and the first time period and the second time period are spaced by N_sym symbols, wherein N_sym is more than or equal to 1 and less than or equal to 4. Fig.6 shows the condition that N_sym is equal to 1. Wherein, the first time period comprises the first 2 OFDM symbols, and the second time period comprises the last 11 OFDM symbols; and the user equipment receives the control signaling sent by the first network equipment in the first 2 OFDM symbols of a TTI, and receives the data signals sent by the second network equipment in the last 11 OFDM symbols of the TTI after the duration of 1 OFDM. In this implementation, the control signaling is in the first two symbols in one TTI, so the design keeps the characteristics in the prior art. Namely, the control signaling and the data signals are in the same TTI and are distinguished through different symbols on time, and the design has good compatibility with the prior art.

The value of N sym is fixed and can be preset at the second network equipment side and the UE side, so that the second network equipment and the UE can carry out corresponding receiving and sending operations; and the value of N sym can also be determined in a negotiated mode.

In another implementation, the first time period and the second time period can be in different TTIs. Fig.7 shows an example that the first time period is in the first TTI and the second time period is in the second TTI. Because the second network equipment needs to decode the control signaling at the interval of the first time period and the second time period and schedule the user data according to the acquired control signaling, if the interval only comprises multiple symbols and the first time period and the second time period are in the same TTI, higher requirement is brought to the second network equipment. Thus, in a way that the UE receives the control signaling and the data signals at two time periods in different TTIs, the requirement for quick processing for the second network equipment is reduced.

Further, the first time period is in the control domain of the first TTI, namely, the first two symbols of a TTI, and the second time period is in the data domain of the second TTI, namely, the last 12 symbols of another TTI. Fig.7 shows the example that the first time period is in the first two symbols of the first TTI and the second time period is in the last 12 symbols of the second TTI, namely, the first time period is in the control domain of the first TTI and the second time period is in the data domain of the second TTI. In this way, the design can be kept consistent with the prior art as much as possible, namely, for any TTI, the design does not change the designs of the control domain and the data domain in the prior art and thus has higher compatibility with the prior art.

It shall be noted that, the first TTI and the second TTI only represent different TTIs. They are not limited as two continuous TTIs, and can also be discontinuous TTIs.

In the embodiment of the present invention, the first network equipment can send the control signaling to the UE and the second network equipment through the air interface, so that the first interface with longer transmission delay is prevented from being used for transmitting the control signaling, and the transmission delay of the control signaling between the network equipments is shortened. By transmitting the user data through the first interface, excessive information can be prevented from being transmitted through the air interface, so that the complexity of acquiring the user data through the air interface by the network equipment is reduced.

Alternatively, before the step 520, the method provided in the embodiment of the present invention can also comprise:
step 511, the first network equipment sends interval information of the first time period and the second time period to the UE, and the UE receives the interval information sent by the first network equipment, so as to receive the control signaling and the data signals according to the interval information.

Further, the first network equipment also sends the interval information of the first time period and the second time period to the second network equipment, and the second network equipment receives the interval information sent by the first network equipment, so as to send the data signals according to the interval information.

For example, if the interval is 2 symbols, the first network equipment sends the interval information with the interval being 2 symbols to the UE, and the UE waits for 2 symbols after receiving the control signaling at the first time period and then receives the data signals according to the interval information.

Moreover, in this step, the first network equipment can send information of the second time period, which replaces the interval information, to the UE and the second network equipment. The information of the first time period is configured in advance, and both the network equipment and the UE can determine the first time period, so that the UE and the second network equipment can determine the second time period through the method provided in this step.

The step 511 can be executed before or after the step 510.

Alternatively, before the step 510, the method provided in the embodiment of the present invention can also comprise:
step 500, the second network equipment sends capability confirming information to the first network equipment, wherein the capability confirming information is used for indicating that the second network equipment can support receiving the control signaling from the second interface.

After receiving the capability confirming information, the first network equipment sends the control signaling and the user data to the second network equipment by using the method provided in the embodiment of the present invention.

Wherein, the capability confirming information can be realized in multiple modes. For example, the capability confirming information is a flag with one bit. The flag with a value of 1 represents that the second network equipment can receive the control signaling through the second interface and receive the user data through the first interface, and after receiving the capability confirming information, the first network equipment can carry out related operations by using the method provided in the embodiment of the present invention. Moreover, if the flag is represented as 0, the first network equipment can send the control signaling and the user data to the UE according to the method provided in the prior art, and does not send the user data to the UE through the second network equipment.

Alternatively, before the step 510, the method provided in the embodiment of the present invention can also comprise:
step 501, according to the channel quality between the first network equipment and the second network equipment, the first network equipment judges whether the channel quality enables the second network equipment to accurately receive the control signaling; and if the channel quality enables the second network equipment to accurately receive the control signaling with higher probability (e.g., 99%), the control signaling and the user data are sent respectively by using the second interface and the first interface, namely, the step 510 is further executed.

Through the method of the step 501, the second network equipment can reliably enough receive the control signaling sent by the first network equipment through the air interface, thus it can ensure that the whole mechanism of the embodiment of the present invention can well work.

Definitely, the step 501 and the capability confirming information of the step 500 can be used together for determining whether the control signaling and the user data can be sent to the second network equipment by using the method provided in the embodiment of the present invention, namely, if the channel quality enables the second network equipment to accurately receive the control signaling with higher probability and the capability confirming information indicates that the second network equipment can support receiving the control signaling from the second interface, the step 510 is executed.

Wherein, as shown in Fig.5a, the step 501 can further comprise:
step 5011a, the first network equipment sends reference signal (RS) to the second network equipment;
step 5012b, the second network equipment determines channel quality between the first network equipment and the second network equipment according to the RS.

Specifically, the second network equipment can measure the RS, determine channel quality information between the first network equipment and the second network equipment and send the channel quality information to the first network equipment; the first network equipment judges whether the channel quality enables the second network equipment to accurately receive the control signaling according to the channel quality information; and if the channel quality enables the second network equipment to accurately receive the control signaling with higher probability, the control signaling and the user data are sent respectively by using the second interface and the first interface, namely, the step 510 is further executed.

Moreover, the first network equipment can also send configuration information of the RS to the second network equipment, so that the second network equipment acquires parameters of the RS sent by the first network equipment and then measures the RS sent by the first network equipment. In this way, the measurement is relatively stable and reliable. Or, the second network equipment determines the RS sent by the first network equipment through a blind detection method, so that the information sent from the first network equipment to the second network equipment can be saved. For example, a configuration for selecting only one from multiple downlink synchronous signals according to the cell identity (ID) is preset in the network equipment, in this way, the second network equipment can carry out blind detection on the downlink synchronous signal according to the configuration. Thus, the second network equipment can judge the cell ID corresponding to the first network equipment, determine the RS sent by the first network equipment according to the cell ID and measure the RS.

Or, as shown in Fig.5b, the step 501 can further comprise:
step 5011a', the second network equipment sends the RS to the first network equipment;
step 5012b', the first network equipment measures the RS, acquires the channel quality between the first network equipment and the second network equipment and judges whether the channel quality enables the second network equipment to accurately receive the control signaling with higher probability according to the channel quality. If the channel quality enables the second network equipment to accurately receive the control signaling with higher probability, the first network equipment sends the control signaling and the user data to the second network equipment by using the method provided in the embodiment of the present invention, namely, the step 510 is further executed.

Wherein, the second network equipment can also send configuration information of the RS to the first network equipment; or the first network equipment determines the RS sent by the second network equipment through a blind detection method, the specific description of which can refer to the aforementioned.

Wherein, the RS can be a common reference signal (CRS) in an LTE system, a channel state information-reference signal (CSI-RS) in an LTE-Advanced system or the like.

Wherein, the channel quality information is the one for reflecting whether a channel is beneficial to transmission, such as an indicator for reflecting received signal intensity or disturbance intensity, and the channel quality information can comprise at least one of a signal interference noise ratio (SINR), a channel quality indicator (CQI) and a reference signal received power (RSRP).

It shall be noted that the embodiment of the prevent invention does not limit the interface for sending the channel quality information, the configuration information of the RS or the RS, for example, the interface can be the first interface or the second interface, or other interface.

Alternatively, before the step 510, the method provided in the embodiment of the present invention can also comprise:
step 502, the first network equipment sends UE information to the second network equipment through the first interface or the second interface, and the second network equipment detects the control signaling corresponding to the UE information according to the UE information.

In this step, on the one hand, the UE information can be used for indicating the UE required to be detected by the second network equipment to the second network equipment; and on the other hand, the UE information can also be used for triggering the second network equipment to process the UE corresponding to the UE information according to the method provided in the embodiment of the present invention, namely, for the UE corresponding to the UE information, the step 510 is executed.

A network comprises multiple UEs, the second network equipment generally sends the data signals to a part of the UEs, a good channel condition is generally formed between the UEs and the second network equipment, such as the UE closer to the second network equipment, and the first network equipment generally can determine the UE with good channel condition with the second network equipment after receiving the measurement report reported by the UE, and therefore, the first network equipment can send the UE information of the UE to the second network equipment, so that the second network equipment only needs to detect the control signaling of the UE corresponding to the UE information and carry out the subsequent operations. In this way, the complexity of the second network equipment is reduced. Moreover, for a scene using the CoMP technology, the first network equipment and the second network equipment generally only serve a part of UEs in a coordinated mode, and therefore, such design can also reduce the complexity of the second network equipment in the CoMP scene.

Definitely, the UE information can also be not sent, and under this condition, the second network equipment can detect the control signaling corresponding to all the UE information owned by the second network equipment.

Wherein, the UE information can be a RNTI of the UE. Generally, the RNTIs of all the UE served by the same network equipment are different from each other. The network equipment sends the control signaling, and if the control signaling is used for scheduling downlink data for a certain UE, the RNTI of the UE is generally loaded, so that the UE can confirm whether the control signaling is used for scheduling its own downlink data. In the embodiment of the present invention, the first network equipment loads the RNTI of the scheduled UE in the sent control signaling, and the second network equipment can detect the control signaling by using the RNTI of the UE sent from the first network equipment to the second network equipment in advance. If the second network equipment detects the control signaling corresponding to the RNTI of the UE, the user data corresponding to the UE is scheduled according to the detected control signaling. Wherein, the method for loading the RNTI can be any implementation in the prior art, for example, exclusive OR operation is carried out on the RNTI of the UE and the cyclic redundancy check (CRC) bit of the control signaling, which is not described herein.

Further, in the step 520, the control signaling sent by the first network equipment through the second interface can comprise processing indicating information, wherein the processing indicating information is used for indicating whether the second network equipment sends the user data acquired from the first network equipment to the user equipment according to the control signaling. The second network equipment detects the control signaling, and judges according to the processing indicating information whether the user data acquired from the first network equipment is processed according to the control signaling; and if the processing indicating information indicates that the user data acquired from the first network equipment is processed according to the control signaling, the step 530 is executed.

Wherein, the processing indicating information can be realized in multiple modes.

For example, one flag can be added at a fixed bit position in the control signaling, and the flag with a value of 1 is used for instructing the second network equipment to schedule the user data acquired from the first network equipment according to the control signaling and send the generated data signals. Through the processing indicating information, the first network equipment can also control the second network equipment to only schedule the user data corresponding to a part of UEs.

For another example, the processing indicating information can be identity (ID) corresponding to the second network equipment. Each network equipment corresponds to one ID. If the processing indicating information is the ID of the second network equipment, after the second network equipment receives the processing indicating information, the second network equipment can confirm that the second network equipment itself needs to schedule the user data acquired from the first network equipment according to the ID and send the generated data signals. For the scene that the first network equipment is connected with multiple second network equipments, the processing indicating information enables each of the multiple second network equipment to respectively identify the control signaling corresponding to the user data which needs to be scheduled by the second network equipment itself, so that the first network equipment can send the data signals to the UE through the second network equipment more flexibly. Wherein, the ID corresponding to the second network equipment can be sent in advance from the second network equipment to the first network equipment, or is preset by the first network equipment, or is the cell ID corresponding to the second network equipment.

Moreover, the processing indicating information can be used with the UE information in the step 502. For example, after the second network equipment receives the UE information, the second network equipment detects the control signaling corresponding to the UE information, and judges whether the user data of the user equipment corresponding to the detected control signaling is scheduled by the second network equipment according to the processing indicating information in the detected control signaling.

Alternatively, before or in the step 520, the method provided in the embodiment of the present invention can also comprise:
step 512, the first network equipment sends mode configuration signaling to the UE, wherein the mode configuration signaling is used for instructing the UE to receive the control signaling and the data signals at the first time period and the second time period; and the UE receives the mode configuration signaling so as to receive the control signaling sent by the first network equipment at the first time period and receive the data signals sent by the second network equipment at the second time period according to the control signaling.

It shall be noted that, in the embodiment of the present invention, the step 511 can be executed at any time before the step 520. Herein, the step 511 is exemplified after the step 510, but is not limited to being executed after the step 510.

Because the time periods when the UE receives the control signaling and the data signals sent by the network equipment are discontinuous in the embodiment of the present invention, the first network equipment can send mode configuration signaling to the UE, so that the UE determines which time period in the embodiment of the present invention is used for receiving the control signaling and the data signals according to the mode configuration signaling. For example, for the embodiment shown in Fig.6, the UE detects the control signaling in the first 2 symbols in a TTI and detects the data signals in the last 11 symbols in the TTI. For another example, for the embodiment shown in Fig.7, the UE detects the control signaling in the first 2 symbols of a first TTI and detects the data signals in the last 12 symbols of a second TTI. If the mode configuration signaling indicates that the UE receives the control signaling and the data signals at the time periods in the prior art, the UE detects the control signaling in the first 2 symbols in a TTI and detects the data signals in the last 12 symbols in the TTI according to a mode shown in Fig.1.

Wherein, the first network equipment can also send the mode configuration signaling to the UE in the control signaling. For example, the mode configuration signaling is sent to the UE in a PDCCH of an LTE system; and because the PDCCH is dynamically sent to the UE by the network equipment, a receiving mode can be dynamically configured for the UE by sending the mode configuration signaling in the control signaling, and thus flexibility is brought to the system. Under this condition, the mode configuration signaling can be in the same information bit as the aforementioned processing indicating information. For example, the information bit only comprises one flag, and the flag with a value of 1 is used for instructing the second network equipment to schedule user data acquired from the first network equipment according to the control signaling, and send the generated data signals; and the information bit instructs the UE to receive the control signaling and the data signals at the first time period and the second time period. In such a way, two instructions can be made through one signaling, so that the signaling overhead is reduced.

Alternatively, before the step 510, the method provided in the embodiment of the present invention can also comprise:
step 503, the first network equipment determines a TTI set, and sends information of the TTI set; and after the second network equipment receives the information, the second network equipment receives the control signaling only at a TTI included in the TTI set according to the information of the TTI set, and schedules the user data according to the control signaling.

For example, in the LTE system, one TTI is one subframe, and one radio frame comprises 10 subframes. The first network equipment determines the 3^{rd} and 5^{th} subframes in the radio frame, which use the method provided in the embodiment of the present invention, and sends the information of the 3^{rd} and 5^{th} subframes to the second network equipment; and the second network equipment detects the control signaling sent by the first network equipment only in the 3^{rd} and 5^{th} subframes, and executes subsequent processing according to the control signaling.

Wherein, the first network equipment can send the information of the TTI set in a bitmap mode. Definitely, the sending mode is not only limited to the bitmap mode, for example, the serial number of the TTI can be directly sent and the like.

For example, one frame comprises 10 subframes; and the first network equipment sends 10 bits to the second network equipment, and each bit indicates whether the second network equipment can receive the control signaling sent by the first network equipment in the corresponding subframe. For example, the bit of 1 represents AVAILABLE, the bit of 0 represents NON-AVAILABLE, the 10 bits sent from the first network equipment to the second network equipment are 0010100101 respectively, and the second network equipment is instructed to receive the control signaling sent by the first network equipment in the 2^{nd}, 4^{th}, 7^{th} and 9^{th} subframes, wherein the 10 subframes are numbered from 0.

Wherein, the first network equipment can send the information of the TTI set through the second interface.

Through such method, the second network equipment can use the method provided in the embodiment of the present invention only in a part of TTIs, so that the second network equipment can be simplified.

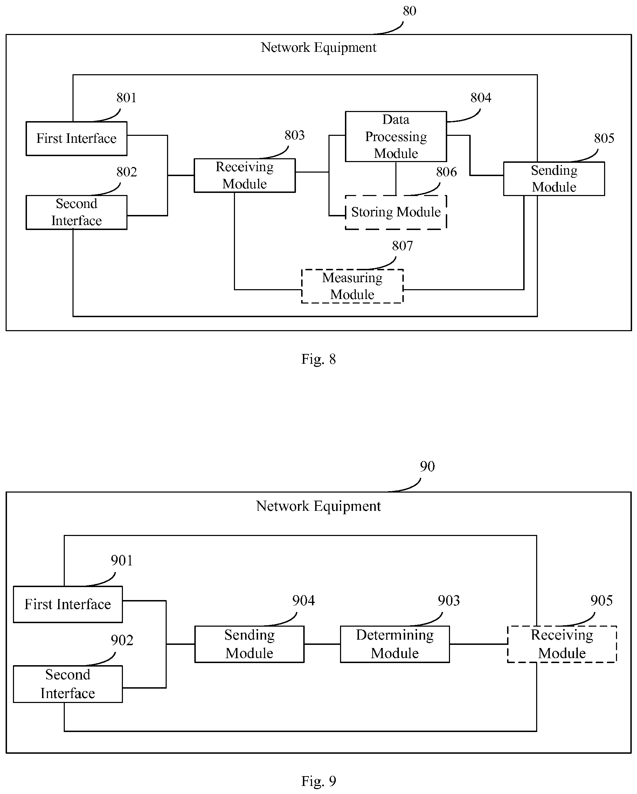

An embodiment of the present invention provides a network equipment 80, and the network equipment 80 can execute the steps included in the methods of the aforementioned embodiments. The embodiment only simply describes the structure of the network equipment 80, the specific implementation of which can be obtained by referring to the description in the aforementioned embodiments. As shown in Fig.8, the network equipment is second network equipment, and the network equipment 80 comprises a first interface 801, a second interface 802, a receiving module 803, a data processing module 804 and a sending module 805.

The second interface 802 is an air interface;
the receiving module 803 is used for receiving user data sent by a first network equipment through the first interface and receiving control signaling sent by the first network equipment through the second interface;
the data processing module 804 is used for acquiring the control signaling received by the receiving module and instructing the sending module to send the user data received by the receiving module; and
the sending module 805 is used for sending the user data to a user equipment.

By using the network equipment provided in the embodiment of the present invention, the control signaling can be sent through the air interface, so that the transmission delay of the control signaling between the network equipments is shortened; and the user data is sent through the first interface, so that excessive information can be prevented from being sent through the air interface, and the complexity of acquiring the user data by the network equipment is reduced. Specifically, the network equipment 80 provided in this embodiment can execute the steps provided in the embodiment of the aforementioned method. Thus, by referring to the description of the embodiments of the aforementioned methods, the technical effects of the network equipment 80 can be obtained, which are not described herein.

Wherein, the sending module 805 specifically can be used for sending the user data to the user equipment through the second interface 802.

Further, the receiving module 803 is specifically used for receiving the user data sent by the second network equipment at the (n-M)^{th} transmission time interval (TTI) and receiving the control signaling at the n^{th} TTI, wherein M is a positive integer more than or equal to 1, and n is an integer.

Further, the first interface is an X2 interface, and M is more than 10.

Further, the receiving module 803 can further be used for receiving interval information of a first time period and a second time period sent by the first network equipment, before receiving the control signaling sent by the first network equipment; and the data processing module 804 is specifically used for determining the second time period according to the interval information received by the receiving module 803 and the first time period, and instructing the sending module 805 to send the user data to the user equipment according to the control signaling at the second time period, wherein the first time period is the one when the second network equipment receives the control signaling; or
the receiving module 803 is further used for receiving information of a second time period sent by the first network equipment before receiving the control signaling sent by the first network equipment is received; and the data processing module 804 is specifically used for determining the second time period according to the information of the second time period received by the receiving module and instructing the sending module 805 to send the user data according to the control signaling at the second time period, wherein the first time period is the one when the second network equipment receives the control signaling.

Further, the data processing module 804 can further be used for instructing the sending module 805 to send capability confirming information before the user data is received, wherein the capability confirming information is used for indicating to the first network equipment that the second network equipment supports receiving the control signaling from the second interface 802;
the sending module 805 can further be used for sending the capability confirming information to the first network equipment.

The network equipment can further comprise: a storing module 806, used for storing the user data sent by the first network equipment and received by the receiving module 803 through the first interface;
the data processing module 804, used for determining the user data corresponding to user equipment information from the storing module 806 according to the user equipment information in the control signaling after the control signaling is received, and sending the user data corresponding to the user equipment information according to the control signaling.

Further, the network equipment can further comprise a measuring module 807; the receiving module 803 can further be used for receiving RS sent from the first network equipment to the second network equipment before receiving the user data sent by the first network equipment through the first interface 801; the measuring module 807 can be used for determining channel quality between the first network equipment and the second network equipment according to the RS received by the receiving module 803; and the sending module 805 is further used for informing the first network equipment of the channel quality determined by the measuring module 807; or
the data processing module 804 can further be used for instructing the sending module 805 to send RS before the user data is received; and the sending module 805 can further be used for sending the RS to the second network equipment, so that the first network equipment determines channel quality between the first network equipment and the second network equipment according to the RS.

Further, the receiving module 803 can further be used for receiving user equipment information sent by the first network equipment through the first interface 801 or the second interface 802 before receiving the control signaling;
the receiving module 803 specifically can be used for receiving the control signaling in the following mode: detecting and receiving the control signaling according to the user equipment information.

Further, the receiving module 803 can further be used for receiving a transmission time interval (TTI) set determined by the first network equipment before receiving the control signaling;
the receiving module 803 specifically can be used for receiving the control signaling in the following mode: detecting and receiving the control signaling at a TTI included in the TTI set.

The data processing module 804 specifically can be used for instructing the sending module to send the user data received by the receiving module 803 in the following mode:
if processing indicating information indicates that the user data acquired from the first network equipment is scheduled according to the control signaling, instructing the sending module 805 to send the user data according to the control signaling, wherein the control signaling comprises the processing indicating information for indicating that the user data acquired from the first network equipment is sent to the user equipment according to the control signaling.

The first network equipment is one of a base station (BS), an access point (AP), a remote radio equipment (RRE), a remote radio head (RRH), a remote radio unit (RRU) and a relay node;
the second network equipment is one of a base station (BS), an access point (AP), a remote radio equipment (RRE), a remote radio head (RRH), a remote radio unit (RRU) and a relay node.

Another embodiment provides a network equipment 90, and the network equipment 90 can execute the steps included in the methods of the aforementioned embodiments. The embodiment only simply describes the structure of the network equipment 90, the specific implementation of which can be obtained by referring to the description in the aforementioned embodiments. As shown in Fig.9, the network equipment is a first network equipment, and the network equipment 90 comprises a first interface 901, a second interface 902, a determining module 903 and a sending module 904.

The second interface 902 is an air interface;
the determining module 903 is used for instructing the sending module 904 to send user data of a user equipment to a second network equipment through the first interface 901, and instructing the sending module 904 to send control signaling through the second interface 902;
the sending module 904 is used for sending the user data of the user equipment to the 19 second network equipment through the first interface 901, and sending the control signaling through the second interface 902, so that the second network equipment sends the user data to the user equipment according to the control signaling, wherein the second interface 902 is the air interface.

The network equipment 90 provided in the embodiment can execute the steps included in the embodiment of the aforementioned method. Thus, by referring to the description of the embodiments of the aforementioned methods, the technical effects of the network equipment 90 can be obtained, which are not described herein.

Further, the sending module 904 is specifically used for sending the user data to the second network equipment at the (n-M)^{th} transmission time interval (TTI) and sending the control signaling at the n^{th} TTI, wherein M is a positive integer more than or equal to 1, and n is an integer.

Wherein, the first interface 901 can be an X2 interface, and M is more than 10.

Further, the sending module 904 is further used for, before sending the control signaling through the second interface 902, sending interval information of a first time period and a second time period to the user equipment, and sending the interval information of the first time period and the second time period to the second network equipment; or
the sending module 904 is further used for, before sending the control signaling through the second interface, sending information of the second time period to the user equipment, and sending the information of the second time period to the second network equipment,
wherein, the first time period is the one when the first network equipment sends the control signaling, and the second time period is the one when the second network equipment sends the user data.

Further, the network equipment 90 can further comprise:
a receiving module 905, used for receiving capability confirming information sent from the second network equipment to the first network equipment, wherein the capability confirming information is used for indicating that the second network equipment supports receiving the control signaling from the second interface 902.

Further, the determining module 903 is specifically used for judging whether channel quality between the first network equipment and the second network equipment can satisfy the condition that the second network equipment accurately receives the control signaling according to the channel quality; and instructing the sending module 904 to send the user data of the user equipment to the second network equipment through the first interface 901, if the first network equipment determines that the channel quality can satisfy the condition that the second network equipment accurately receives the control signaling.

Further, the determining module 903 is specifically used for instructing the sending module 904 to send reference signal (RS) to the second network equipment, acquiring the channel quality received by the receiving module 905, and instructing the sending module 904 to send the user data to the second network equipment through the first interface 901 if the channel quality can satisfy the condition that the second network equipment accurately receives the control signaling; the sending module 904 is further used for sending the reference signal (RS) to the second network equipment according to the instruction of the determining module 903; and the receiving module 905 is further used for receiving the channel quality informed by the second network equipment, wherein the channel quality is determined by the second network equipment according to the RS; or
the receiving module 905 is further used for receiving the RS sent from the second network equipment to the first network equipment; and the determining module 903 is specifically used for determining the channel quality between the first network equipment and the second network equipment according to the RS received by the receiving module 905, and instruction the sending module 904 to send the user data of the user equipment to the second network equipment through the first interface 901 if the channel quality can satisfy the condition that the second network equipment accurately receives the control signaling.

Further, the sending module 904 is further used for sending user equipment information to the second network equipment through the first interface 901 or the second interface 902, so that the second network equipment detects the control signaling according to the user equipment information.

Further, the sending module 904 is further used for sending mode configuration signaling to the user equipment before sending the control signaling through the second interface 902, wherein the mode configuration signaling is used for indicating that the user equipment receives the control signaling and the user data at the first time period and the second time period; or,
the sending module 904 is further used for sending the control signaling comprising mode configuration signaling through the second interface 902, wherein the mode configuration signaling is used for indicating that the user equipment receives the control signaling and the user data at the first time period and the second time period,
wherein, the first time period is the one when the user equipment and the second network equipment receive the control signaling, and the second time period is the one when the user equipment receives the user data from the second network equipment.

Further, the sending module 904 is specifically used for sending the control signaling comprising processing indicating information through the second interface 902, wherein the processing indicating information is used for indicating that the user data acquired from the first network equipment is sent to the user equipment according to the control signaling.

Further, before instructing the sending module 904 to send the control signaling through the second interface 902, the determining module 903 is specifically used for determining a transmission time interval (TTI) set, and instructing the sending module 904 to send information of the TTI set;
the sending module 904 is further used for sending the information of the TTI set, so that the second network equipment and the user equipment receive the control signaling only at a TTI included in the TTI set.

Further, the sending module 904 is specifically used for sending the information of the TTI set in the following mode: sending the information of the TTI set in a bitmap mode.

Further, the sending module 904 is specifically used for sending the information of the TTI set in the following mode: sending the information of the TTI set through the second interface 902.

The first network equipment is one of a base station (BS), an access point (AP), a remote radio equipment (RRE), a remote radio head (RRH), a remote radio unit (RRU) and a relay node;
the second network equipment is one of a base station (BS), an access point (AP), a remote radio equipment (RRE), a remote radio head (RRH), a remote radio unit (RRU) and a relay node.

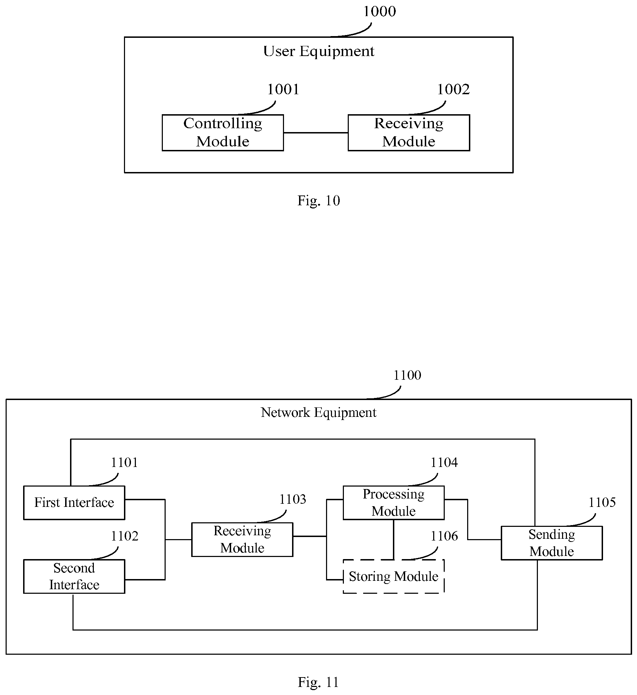

An embodiment provides a user equipment 1000, and the user equipment 1000 can execute the steps included in the methods of the aforementioned embodiments. The embodiment only simply describes the structure of the user equipment 1000, the specific implementation of which can be obtained by referring to the description in the aforementioned embodiments. As shown in Fig. 10, the user equipment 1000 comprises a controlling module 1001 and a receiving module 1002.

The controlling module 1001 is used for controlling the receiving module 1002 to receive control signaling at a first time period and controlling the receiving module 1002 to receive user data at a second time period; and
the receiving module 1002 is used for receiving the control signaling sent by a first network equipment at a first time period and receiving the user data sent by a second network equipment according to the control signaling at a second time period according to the control signaling, wherein the first time period and the second time period are discontinuous.

The user equipment 1000 provided in the embodiment can execute the steps included in the embodiment of the aforementioned method. Thus, by referring to the description of the embodiments of the aforementioned methods, the technical effects of the user equipment 1000 can be obtained, which are not described herein.

Further, the controlling module 1001 is specifically used for controlling the receiving module 1002 to receive the control signaling at the first time period and controlling the receiving module 1002 to receive the user data at the second time period, wherein the first time period and the second time period are in the same transmission time interval (TTI), the first time period and the second time period are spaced by N_sym symbols, and N_sym is more than or equal to 1 and less than or equal to 12; or
the controlling module 1001 is specifically used for controlling the receiving module 1002 to receive the control signaling at the first time period and controlling the receiving module 1002 to receive the user data at the second time period, wherein the first time period and the second time period are in different transmission time intervals (TTI).

Further, the controlling module 1001 is specifically used for controlling the receiving module 1002 to receive the control signaling in a control domain of a first TTI which the first time period is in, and controlling the receiving module 1002 to receive the user data in a data domain of a second TTI which the second time period is in.

Further, the receiving module 1002 is further used for receiving interval information of the first time period and the second time period sent by the first network equipment before receiving the control signaling sent by the first network equipment;
the controlling module 1001 is used for determining the second time period according to the interval information received by the receiving module and the first time period or according to information of the second time period; or,
the receiving module 1002 is further used for, before receiving the control signaling sent by the first network equipment, receiving the information of the second time period sent by the first network equipment, and sending the information of the second time period to the controlling module; and the controlling module 1001 is used for determining the second time period according to the information of the second time period.

Further, the receiving module 1002 is further used for receiving mode configuration signaling sent from the first network equipment to the user equipment, before receiving the control signaling sent by the first network equipment; and the controlling module 1001 is further used for controlling the receiving module 1002 to receive the control signaling at the first time period and receive the user data at the second time period, according to the mode configuration signaling received by the receiving module 1002; or,
the controlling module 1001 is further used for controlling the receiving module 1002 to receive the control signaling at the first time period and receive the user data at the second time period according to mode configuration signaling comprised in the control signaling.

Moreover, the embodiment of the present invention further provides a data transmitting system, comprising the network equipment 80, the network equipment 90 and the user equipment 1000 in the aforementioned embodiments, the specific implementations of which can be obtained by referring to the description in the embodiments, and are not described herein.

Another embodiment of the present invention provides a network equipment 1100, and the network equipment 1100 can execute the steps included in the methods of the aforementioned embodiments. The embodiment only simply describes the structure of the network equipment 1100, the specific implementation of which can be obtained by referring to the description in the aforementioned embodiments. As shown in Fig.11, the network equipment is a second network equipment, and the network equipment comprises a first interface 1101, a second interface 1102, a receiving module 1103, a processing module 1104 and a sending module 1105.

Wherein the second interface 1102 is an air interface;
the receiving module 1103 is used for receiving user data sent by a first network equipment through the first interface 1101 and receiving control signaling sent by the first network equipment through the second interface 1102;
the processing module 1104 is used for sending the user data received by the receiving module 1103 to the sending module 1105 according to the control signaling received by the receiving module 1103; and
the sending module 1105 is used for sending the user data to user equipment.

The network equipment 1100 of the embodiment can execute the steps included in the embodiments of the aforementioned methods. Thus, by referring to the description of the embodiments of the aforementioned methods, the technical effects of the network equipment 1100 can be obtained, which are not described herein.

Further, the sending module 1105 is specifically used for sending the user data to the user equipment through the second interface 1102.

The receiving module 1103 is specifically used for receiving the user data sent by the second network equipment at the (n-M)^{th} transmission time interval (TTI) and receiving the control signaling at the n^{th} TTI, wherein M is a positive integer more than or equal to 1, and n is an integer.

The first interface is an X2 interface, and M is more than 10.

Further, the receiving module 1103 is further used for receiving interval information of a first time period and a second time period sent by the first network equipment before receiving the control signaling sent by the first network equipment; and the processing module 1104 is specifically used for determining the second time period according to the interval information received by the receiving module 1103 and the first time period, and sending the user data to the user equipment according to the control signaling at the second time period, wherein the first time period is the one when the second network equipment receives the control signaling; or
the receiving module 1103 is further used for receiving information of the second time period sent by the first network equipment, before receiving the control signaling sent by the first network equipment; and the processing module 1104 is specifically used for determining the second time period according to the information of the second time period received by the receiving module 1103 and instructing the sending module 1105 to send the user data according to the control signaling at the second time period, wherein the first time period is the one when the second network equipment receives the control signaling.

Further, the processing module 1104 is further used for instructing the sending module 1105 to send capability confirming information before the receiving module 1103 receives the user data, wherein the capability confirming information is used for indicating that the second network equipment supports receiving the control signaling from the second interface 1102;
the sending module 1105 is further used for sending the capability confirming information to the first network equipment according to the instruction of the processing module 1104.

Further, the receiving module 1103 is further used for receiving reference signal (RS) sent from the first network equipment to the second network equipment before receiving the user data sent by the first network equipment through the first interface 1101; the processing module 1104 is further used for determining channel quality between the first network equipment and the second network equipment according to the RS; and the sending module 1105 is further used for informing the first network equipment of the channel quality; or
the processing module 1104 is further used for instructing the sending module 1105 to send the RS before the user data is received; and the sending module 1105 is further used for sending the RS to the second network equipment, so that the first network equipment determines channel quality between the first network equipment and the second network equipment according to the RS.

Further, the receiving module 1103 is further used for receiving user equipment information sent by the first network equipment through the first interface 1101 or the second interface 1102 before receiving the control signaling;
the receiving module 1103 is specifically used for receiving the control signaling in the following mode: detecting and receiving the control signaling according to the user equipment information.

Further, the receiving module 1103 is further used for receiving a transmission time interval (TTI) set determined by the first network equipment before receiving the control signaling;
the receiving module 1103 is specifically used for receiving the control signaling in the following mode: detecting and receiving the control signaling at a TTI included in the TTI set.

Further, the processing module 1104 instructs the sending module 1105 to send the user data in the following mode:
if processing indicating information indicates that the user data acquired from the first network equipment is sent according to the control signaling, instructs the sending module 1105 to send the user data according to the control signaling, wherein the control signaling comprises the processing indicating information for indicating that the user data acquired from the first network equipment is sent to the user equipment according to the control signaling.

Further, the network equipment can further comprise:
a storing module 1106, used for storing the user data sent by the first network equipment and received by the receiving module through the first interface;
the processing module 1104, used for determining the user data corresponding to user equipment information from the storing module 1106 according to the user equipment information in the control signaling after the control signaling is received, and sending the user data corresponding to the user equipment information according to the control signaling.

The first network equipment is one of a base station (BS), an access point (AP), a remote radio equipment (RRE), a remote radio head (RRH), a remote radio unit (RRU) and a relay node;
the second network equipment is one of a base station (BS), an access point (AP), a remote radio equipment (RRE), a remote radio head (RRH), a remote radio unit (RRU) and a relay node.

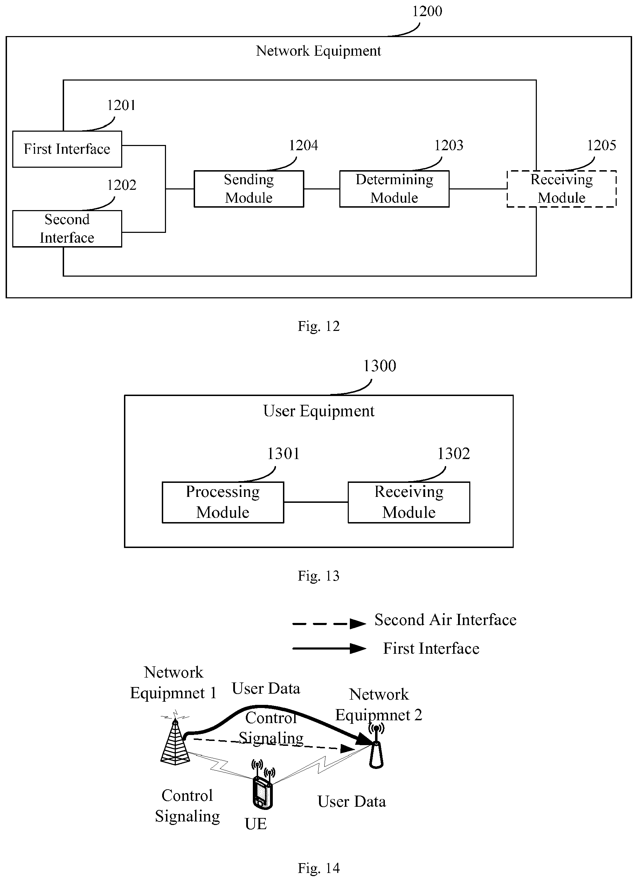

Another embodiment provides a network equipment 1200, and the network equipment 1200 can execute the steps included in the methods of the aforementioned embodiments. The embodiment only simply describes the structure of the network equipment 1200, the specific implementation of which can be obtained by referring to the description in the aforementioned embodiments. As shown in Fig.12, the network equipment is a first network equipment, and the network equipment comprises a first interface 1201, a second interface 1202, a processing module 1203 and a sending module 1204.

Wherein the second interface 1202 is an air interface;
the processing module 1203 is used for instructing the sending module 1204 to send user data of a user equipment to a second network equipment through the first interface 1201, and instructing the sending module 1204 to send control signaling through the second interface 1202;
the sending module 1204 is used for sending the user data of the user equipment to the second network equipment through the first interface 1201, and sending the control signaling through the second interface 1202, so that the second network equipment sends the user data to the user equipment according to the control signaling, wherein the second interface 1202 is the air interface.

The network equipment 1200 provided in the embodiment can execute the steps included in the embodiment of the aforementioned method. Thus, by referring to the description of the embodiments of the aforementioned methods, the technical effects of the network equipment 1200 can be obtained, which are not described herein.

Further, the sending module 1204 is specifically used for sending the user data to the second network equipment at the (n-M)^{th} transmission time interval (TTI), and sending the control signaling at the n^{th} TTI, wherein M is a positive integer more than or equal to 1, and n is an integer.

Wherein, the first interface 1201 is an X2 interface, and M is more than 10.

Further, before sending the control signaling through the second interface 1202, the sending module 1204 is further used for sending interval information of a first time period and a second time period to the user equipment, and sending the interval information of the first time period and the second time period to the second network equipment; or
before sending the control signaling through the second interface, the sending module 1204 is further used for sending information of a second time period to the user equipment, and sending the information of the second time period to the second network equipment;
wherein, the first time period is the one when the first network equipment sends the control signaling, and the second time period is the one when the second network equipment sends the user data.

Moreover, the network equipment can further comprise:
a receiving module 1205, used for receiving capability confirming information sent from the second network equipment to the first network equipment, wherein the capability confirming information is used for indicating that the second network equipment supports receiving the control signaling from the second interface 1202.

Further, the processing module 1203 is specifically used for judging whether channel quality between the first network equipment and the second network equipment can satisfy the condition that the second network equipment accurately receives the control signaling according to the channel quality; and instructing the sending module 1204 to send the user data of the user equipment to the second network equipment through the first interface 1201, if the first network equipment determines that the channel quality can satisfy the condition that the second network equipment accurately receives the control signaling.

Further, the processing module 1203 is specifically used for instructing the sending module 1204 to send reference signal (RS) to the second network equipment, acquiring the channel quality between the first network equipment and the second network equipment transmitted by the receiving module 1205, and instructing the sending module 1204 to send the user data to the second network equipment through the first interface 1201 if the channel quality can satisfy the condition that the second network equipment accurately receives the control signaling; the sending module 1204 is further used for sending the RS to the second network equipment according to the instruction of the processing module 1203; and the receiving module 1205 is further used for receiving the channel quality informed by the second network equipment, wherein the channel quality is determined by the second network equipment by measuring the RS; or
the receiving module 1205 is further used for receiving RS sent from the second network equipment to the first network equipment; and the processing module 1203 is specifically used for determining the channel quality between the first network equipment and the second network equipment according to the RS, and instruction the sending module 1204 to send the user data of the user equipment to the second network equipment through the first interface 1201 if the channel quality can satisfy the condition that the second network equipment accurately receives the control signaling.

Further, the sending module 1204 is further used for sending user equipment information to the second network equipment before sending the control signaling through the second interface 1202, so that the second network equipment detects the control signaling according to the user equipment information.

Further, the sending module 1204 is further used for sending mode configuration signaling to the user equipment before sending the control signaling through the second interface 1202, wherein the mode configuration signaling is used for indicating that the control signaling and the user data are received at the first time period and the second time period; or,
the sending module 1204 is further used for sending the control signaling comprising the mode configuration signaling through the second interface 1202, wherein the mode configuration signaling is used for indicating that the control signaling and the user data are received at the first time period and the second time period,
wherein, the first time period is the one when the user equipment and the second network equipment receive the control signaling, and the second time period is the one when the user equipment receives the user data from the second network equipment.

Further, the sending module 1204 is specifically used for sending the control signaling comprising processing indicating information through the second interface 1202, wherein the processing indicating information is used for indicating that the user data acquired from the first network equipment is sent to the user equipment according to the control signaling.

Further, before instructing the sending module 1204 to send the control signaling through the second interface 1202, the processing module 1203 is specifically used for determining a transmission time interval (TTI) set, and instructing the sending module 1204 to send information of the TTI set;
the sending module 1204 is further used for sending the information of the TTI set, so that the second network equipment and the user equipment receive the control signaling at a TTI included in the TTI set.

Further, the sending module 1204 is specifically used for sending the information of the TTI set in the following mode: sending the information of the TTI set in a bitmap mode.

Further, the sending module 1204 is specifically used for sending the information of the TTI set in the following mode: sending the information of the TTI set through the second interface 1202.

Another embodiment provides a user equipment 1300, and the user equipment 1300 can execute the steps included in the methods of the aforementioned embodiments. The embodiment only simply describes the structure of the user equipment 1300, the specific implementation of which can be obtained by referring to the description in the aforementioned embodiments. As shown in Fig.13, the user equipment 1300 comprises a processing module 1301 and a receiving module 1302.

The processing module 1301 is used for controlling the receiving module 1302 to receive control signaling at a first time period and controlling the receiving module 1302 to receive user data at a second time period; and
the receiving module 1302 is used for receiving the control signaling sent by a first network equipment at the first time period and receiving the user data sent by a second network equipment according to the control signaling at the second time period according to the control signaling, wherein the first time period and the second time period are discontinuous.

The user equipment 1300 provided in the embodiment can execute the steps included in the embodiments of the aforementioned methods. Thus, by referring to the description of the embodiments of the aforementioned methods, the technical effects of the user equipment 1300 can be obtained, which are not described herein.

Further, the processing module 1301 is specifically used for controlling the receiving module 1302 to receive the control signaling at the first time period and controlling the receiving module 1302 to receive the user data at the second time period, wherein the first time period and the second time period are in the same transmission time interval (TTI), the first time period and the second time period are spaced by N_sym symbols, and N_sym is more than or equal to 1 and less than or equal to 12; or
the processing module 1301 is specifically used for controlling the receiving module 1302 to receive the control signaling at the first time period and controlling the receiving module 1302 to receive the user data at the second time period, wherein the first time period and the second time period are in different transmission time intervals (TTI).

Further, the processing module 1301 is specifically used for controlling the receiving module 1302 to receive the control signaling in a control domain of a first TTI which the first time period is in, and controlling the receiving module 1302 to receive the user data in a data domain of a second TTI which the second time period is in.

Further, the receiving module 1302 is further used for receiving interval information of the first time period and the second time period sent by the first network equipment before receiving the control signaling sent by the first network equipment;
the processing module 1301 is used for determining the first time period and the second time period according to the interval information and the first time period.

Or, before receiving the control signaling sent by the first network equipment, the receiving module 1302 is further used for receiving information of the second time period sent by the first network equipment , and transmitting the information of the second time period to the processing module; and the processing module is used for determining the second time period according to the information of the second time period.

Further, the receiving module 1302 is further used for receiving mode configuration signaling sent from the first network equipment to the user equipment before receiving the control signaling sent by the first network equipment; and the processing module 1301 is further used for controlling the receiving module 1302 to receive the control signaling at the first time period and receive the user data at the second time period according to the mode configuration signaling received by the receiving module 1302; or,
the processing module 1301 is further used for controlling the receiving module 1302 to receive the control signaling at the first time period and receive the user data at the second time period according to mode configuration signaling comprised in the control signaling.

Moreover, the embodiment of the present invention further provides a data transmitting system, comprising the network equipment 1100, the network equipment 1200 and the user equipment 1300 in the aforementioned embodiments, the specific implementations of which can be obtained by referring to the description in the aforementioned embodiments and are not described herein.

It shall be noted that, the embodiment of the present invention can be applied to a network equipment or a user equipment in various communication systems. The user equipment and the network equipment provided in the aforementioned embodiments can further comprise components such as a power controller, a decoding processor and the like. The processing module in the embodiment of the present invention can further be named as CPU. Memories can comprise a read-only memory or a random access memory, for providing instructions and data for the processing module. A part of the memories can further comprise a non-volatile random access memory (NVRAM). In a specific application, the user equipment and the network equipment provided in the embodiment of the present invention can comprise carriers for accommodating a sending circuit and a receiving circuit, to allow data sending and receiving between the user equipment or the network equipment and a remote position. The sending module and the receiving module can be coupled to an antenna. All the components are coupled together through a bus system, wherein the bus system comprises a power bus, a control bus and a state signal bus besides a data bus.

The aforementioned processor disclosed in the embodiment of the present invention is probably an integrated circuit chip, and has signal processing capability. The aforementioned processor can be a general processor, a digital signal processor (DSP), an application-specific integrated circuit (ASIC), a field-programmable gate array (FPGA) or other programmable logic devices, a discrete gate or transistor logic device or a discrete hardware component, and can realize or implement the methods, steps and logic diagrams disclosed in the embodiments of the present invention. The general processor can be a microprocessor or any conventional processor such as a baseband processor and the like. The steps of the methods disclosed in the embodiments of the present invention can be directly completed by a hardware decoding processor or a combination of hardware and software modules in the decoding processor. The software module can be positioned in a mature storage medium of the field such as a random access memory, a flash memory, a read-only memory, a programmable read-only memory, an electrically erasable programmable read-only memory, a register or the like. The storage medium is positioned in a memory, and a processing module is used for reading information in the memory and completing the steps included in the aforementioned methods in combination with hardware thereof.

Moreover, the present invention further provides an application example, in which a network equipment 1 and a network equipment 2 serve a UE, as shown in Fig. 14.

The network equipment 1 is used for determining a scheduling scheme for the UE, sending user data to the network equipment 2 through a first interface and sending control signaling to the network equipment 2 through a second interface;
the network equipment 2 is used for receiving and acquiring the control signaling, processing the user data acquired from the network equipment 1 according to the control signaling, and sending generated data signals; for example, in an LTE system, a physical resource block (PRB) is the minimum unit for scheduling a downlink frequency resource, and one PRB comprises 12 subcarriers on a frequency domain. If the control signaling indicates that the 1^{st} to 3^{rd} PRBs are distributed to the UE to send downlink signals, the network equipment 2 maps the user data to the 1^{st} to 3^{rd} PRBs after receiving the control signaling, and sends the user data to the UE;
the UE detects the control signaling sent by the network equipment 1 at a first time period through the second interface, and receives the data signals sent by the network equipment 2 at the second time period according to the control signaling, wherein the first time period and the second time period are discontinuous. For example, the control signaling indicates that the 1^{st} to 3^{rd} PRBs are distributed to the UE to send the downlink signals, and the UE receives the data signals on the 1^{st} to 3^{rd} PRBs.

The network equipment 1 sends the control signaling at the first time period, the network equipment 2 sends the data signals to the UE at the second time period, and the first time period and the second time period are discontinuous, the advantage of which is that, after a certain period of time from receiving the control signaling sent by the network equipment 1 at the first time period, the network equipment 2 can detect and acquire the control signaling sent by the network equipment 1 , and schedule the user data according to the control signaling. In this way, the network equipment 2 finally can send the data signals to the UE at the second time period. A period of time is reserved for the network equipment 2 between the first time period and the second time period, so that the processing speed requirements of the network equipment 2 for detecting and acquiring the control signaling and scheduling the user data are reduced.

It shall be noted that, because the transmission of the signals has certain delay, the first time period and the second time period are not understood to be absolute time windows for the network equipment 1, the network equipment 2 and the UE. For example, when the network equipment 1 starts sending the control signaling, the network equipment 2 can receive the control signaling after certain delay, and therefore, the first time period understood by the network equipment 1 and the network equipment 2 has certain deviation on the absolute time. However, in the embodiment of the present invention, the control signaling is sent through the air interface, and the second network equipment sends the data to the UE through the air interface, so that the delay is very short, and the deviation can be ignored.

By adopting the methods provided in the embodiments of the present invention, the control signaling can be sent through the air interface, so that the transmission delay of the control signaling between the network equipments is shortened; and the user data is sent through the first interface, so that excessive information is prevented from being sent through the air interface, and the complexity of acquiring the user data by the network equipment is reduced.

It can be understood by those of ordinary skill in the art that all of or a part of steps in the methods of the aforementioned embodiments can be completed by instructing related hardware through programs, the programs can be stored in a computer-readable storage medium, and the storage medium can comprise a read only memory (ROM), a random access memory (RAM), a disk, an optical disk or the like.

The methods, user equipments and base stations provided in the embodiments of the present invention are introduced above in details. The principles and implementations of the present invention are illustrated by using specific examples in the present invention, and the illustration of the aforementioned embodiments is only used for assisting in understanding the methods of the present invention and core concepts thereof. Meanwhile, for those of ordinary skill in the art, modification can be made to the specific implementations and application scope in accordance with the scope of the present invention, as defined by the appended claims. In conclusion, the contents of the specification should not be understood as limitation to the present invention.

## Claims

1. A method for sending data, comprising:
receiving (310), by a second network equipment, user data sent by a first network equipment through a first interface, wherein a connection between the first network equipment and the second network equipment is backhaul, and the connection is used for user data transmission on the first interface;
receiving (320), by the second network equipment, control signaling sent by the first network equipment through a second interface, wherein the second interface is an air interface; and
sending (330), by the second network equipment, the user data to a user equipment, UE, according to the control signaling, wherein the control signaling is also received by the UE through the second interface, and the control signaling is used for scheduling a resource for carrying the user data .

2. The method according to claim 1, wherein the receiving (310), by the second network equipment, user data sent by a first network equipment, comprises:
receiving, by the second network equipment, the user data sent by the first network equipment at the (n-M)^{th} transmission time interval, TTI, wherein M is a positive integer more than or equal to 1, and n is an integer; and
wherein the receiving (320), by the second network equipment, control signaling sent by the first network equipment, comprises: receiving, by the second network equipment, the control signaling at the n^{th} TTI.

3. The method according to claim 2, wherein the first interface is an X2 interface, and M is more than 10.

4. The method according to any one of claims 1-3, wherein
before the receiving (320), by the second network equipment, control signaling sent by the first network equipment, the method further comprises: receiving interval information of a first time period and a second time period sent by the first network equipment; the receiving, by the second network equipment, control signaling, comprising: receiving, by the second network equipment, the control signaling sent by the first network equipment through the second interface at the first time period; and the sending, by the second network equipment, the user data to a user equipment, comprising: determining the second time period according to the interval information and the first time period; and sending the user data to the user equipment according to the control signaling at the second time period; or,
before the receiving (320), by the second network equipment, control signaling sent by the first network equipment, the method further comprises: receiving information of a second time period sent by the first network equipment; the receiving, by the second network equipment, control signaling, comprising: receiving, by the second network equipment, the control signaling sent by the first network equipment through the second interface at the first time period; and the sending, by the second network equipment, the user data to a user equipment, comprising: determining the second time period according to the information of the second time period; and sending the user data to the user equipment according to the control signaling at the second time period.

5. The method according to any one of claims 1-4, wherein the sending (330), by the second network equipment, the user data to a user equipment according to the control signaling, comprises:
after the receiving, by the second network equipment, the control signaling, determining the user data corresponding to user equipment information according to the user equipment information in the control signaling, scheduling the user data corresponding to the user equipment information acquired from the first network equipment according to the control signaling, generating data signals by using the user data corresponding to the user equipment information, and sending the data signals to the user equipment.

6. A network equipment (80), the network equipment being a second network equipment, and comprising:
a first interface (801) and a second interface (802), wherein the second interface (802) is an air interface;
a receiving module (803), adapted to receive user data sent by a first network equipment through the first interface (801) and receive control signaling sent by the first network equipment through the second interface (802) to the second network equipment and a user equipment (1000), wherein a connection between the first network equipment and the second network equipment is backhaul, and the receiving module (803) is adapted to use the connection for user data reception on the first interface;
a data processing module (804), adapted to acquire the control signaling received by the receiving module (803), use the control signaling for scheduling a resource and instruct a sending module (805) to send the user data received by the receiving module (803) to the user equipment by using the resource scheduled by the control signaling; and
the sending module (805), adapted to send the user data to the user equipment on the resource scheduled by the control signaling.

7. The network equipment according to claim 6, wherein
the receiving module (803) is specifically adapted to receive the user data sent by the first network equipment at the (n-M)^{th} transmission time interval, TTI, and receive the control signaling at the n^{th} TTI, and wherein M is a positive integer more than or equal to 1, and n is an integer.

8. The network equipment according to claim 7, wherein
the first interface (801) is an X2 interface, and M is more than 10.

9. The network equipment according to any one of claims 6-8, wherein
the receiving module (803) is further adapted to receive interval information of a first time period and a second time period sent by the first network equipment before receiving the control signaling sent by the first network equipment; and the data processing module (804) is specifically adapted to determine the second time period according to the interval information received by the receiving module (803) and the first time period, and instruct the sending module (805) to send the user data according to the control signaling at the second time period, wherein the first time period is the one when the second network equipment receives the control signaling; or
the receiving module (803) is also adapted to receive information of a second time period sent by the first network equipment before receiving the control signaling sent by the first network equipment; and the data processing module (804) is specifically adapted to determine the second time period according to the information of the second time period received by the receiving module (803) and instruct the sending module (805) to send the user data according to the control signaling at the second time period, wherein the first time period is the one when the second network equipment receives the control signaling.

10. The network equipment according to any one of claims 6-9, wherein
the data processing module (804) is further adapted to instruct the sending module (805) to send capability confirming information before the receiving module (803) receives the user data, wherein the capability confirming information is used for indicating that the second network equipment supports receiving the control signaling from the second interface;
the sending module (805) is further adapted to send the capability confirming information to the first network equipment.

11. A system comprising a user equipment (1000), a first network equipment and a second network equipment according to any of claims 6 - 10, wherein
the user equipment (1000) comprises:
a controlling module (1001), adapted to control a receiving module (1002) to receive control signaling at a first time period and control the receiving module (1002) to receive user data at a second time period; and
the receiving module (1002), adapted to receive the control signaling sent by a first network equipment at the first time period and receive the user data sent by a second network equipment at the second time period according to the control signaling, wherein the first time period and the second time period are discontinuous.

12. The system according to claim 11, wherein
the controlling module (1001) is specifically adapted to control the receiving module (1002) to receive the control signaling at the first time period and control the receiving module (1002) to receive the user data at the second time period, wherein the first time period and the second time period are in the same transmission time interval, TTI, the first time period and the second time period are spaced by N_sym symbols, and N_sym is more than or equal to 1 and less than or equal to 12; or
the controlling module (1001) is specifically adapted to control the receiving module (1002) to receive the control signaling at the first time period and control the receiving module (1002) to receive the user data at the second time period, wherein the first time period and the second time period are in different transmission time intervals, TTI.

13. The system according to claim 12, wherein
the controlling module (1001) is specifically adapted to control the receiving module (1002) to receive the control signaling in a control domain of a first TTI which the first time period is in, and control the receiving module (1002) to receive the user data in a data domain of a second TTI which the second time period is in.

14. The system according to any one of claims 11-13, wherein
the receiving module (1002) is further adapted to receive interval information of the first time period and the second time period sent by the first network equipment, before receiving the control signaling sent by the first network equipment; and the controlling module (1001) is adapted to determine the second time period according to the interval information received by the receiving module (1002) and the first time period; or,
the receiving module (1002) is further adapted to receive information of the second time period sent by the first network equipment, before receiving the control signaling sent by the first network equipment; and the controlling module (1001) is adapted to determine the second time period according to the information of the second time period received by the receiving module (1002).

15. The system according to any one of claims 11-14, wherein
the receiving module (1002) is further adapted to receive mode configuration signaling sent from the first network equipment to the user equipment, before receiving the control signaling sent by the first network equipment; and the controlling module (1001) is further adapted to control the receiving module (1002) to receive the control signaling at the first time period and receive the user data at the second time period, according to the mode configuration signaling received by the receiving module (1002); or,
the controlling module (1001) is further adapted to control the receiving module (1002) to receive the control signaling at the first time period and receive the user data at the second time period according to mode configuration signaling comprised in the control signaling.

## Patentansprüche

1. Verfahren zum Senden von Daten, umfassend:
Empfangen (310), durch ein zweites Netzwerkgerät, von Benutzerdaten, die durch ein erstes Netzwerkgerät über eine erste Schnittstelle gesendet werden, wobei eine Verbindung zwischen dem ersten Netzwerkgerät und dem zweiten Netzwerkgerät "Backhaul" ist und die Verbindung zur Benutzerdatenübertragung auf der ersten Schnittstelle verwendet wird;
Empfangen (320) durch das zweite Netzwerkgerät einer Steuersignalisierung, die durch das erste Netzwerkgerät über eine zweite Schnittstelle gesendet wird, wobei die zweite Schnittstelle eine Luftschnittstelle ist; und
Senden (330), durch das zweite Netzwerkgerät, der Benutzerdaten zu einem Benutzergerät, UE (User Equipment), gemäß der Steuersignalisierung, wobei die Steuersignalisierung auch durch das UE über die zweite Schnittstelle empfangen wird und die Steuersignalisierung zur Planung einer Ressource, die die Benutzerdaten trägt, verwendet wird.

2. Verfahren nach Anspruch 1, wobei
das Empfangen (310), durch das zweite Netzwerkgerät, von Benutzerdaten, die durch ein erstes Netzwerkgerät gesendet werden, umfasst:
Empfangen, durch das zweite Netzwerkgerät, der Benutzerdaten, die durch das erste Netzwerkgerät gesendet werden, im (n-M)-ten Übertragungszeitintervall, TTI (Transmission Time Interval), wobei M eine positive ganze Zahl größer oder gleich 1 ist und n eine ganze Zahl ist; und
wobei das Empfangen (320), durch das zweite Netzwerkgerät, einer Steuersignalisierung, die durch das erste Netzwerkgerät gesendet wird, umfasst:
Empfangen, durch das zweite Netzwerkgerät, der Steuersignalisierung im n-ten TTI.

3. Verfahren nach Anspruch 2, wobei die erste Schnittstelle eine X2-Schnittstelle ist und M größer als 10 ist.

4. Verfahren nach einem der Ansprüche 1-3, wobei
vor dem Empfangen (320), durch das zweite Netzwerkgerät, der Steuersignalisierung, die durch das erste Netzwerkgerät gesendet wird, das Verfahren ferner umfasst: Empfangen von Intervallinformationen einer ersten Zeitperiode und einer zweiten Zeitperiode, die durch das erste Netzwerkgerät gesendet werden; wobei das Empfangen, durch das zweite Netzwerkgerät, einer Steuersignalisierung umfasst: Empfangen, durch das zweite Netzwerkgerät, der Steuersignalisierung, die durch das erste Netzwerkgerät über die zweite Schnittstelle in der ersten Zeitperiode gesendet wird; und das Senden, durch das zweite Netzwerkgerät, der Benutzerdaten zu einem Benutzergerät umfasst: Bestimmen der zweiten Zeitperiode gemäß den Intervallinformationen und der ersten Zeitperiode; und Senden der Benutzerdaten zum Benutzergerät gemäß der Steuersignalisierung in der zweiten Zeitperiode; oder
vor dem Empfangen (320) durch das zweite Netzwerkgerät, einer Steuersignalisierung, die durch das erste Netzwerkgerät gesendet wird, das Verfahren ferner umfasst: Empfangen von Informationen einer zweiten Zeitperiode, die durch das erste Netzwerkgerät gesendet werden; wobei das Empfangen, durch das zweite Netzwerkgerät, einer Steuersignalisierung umfasst: Empfangen, durch das zweite Netzwerkgerät, der Steuersignalisierung, die durch das erste Netzwerkgerät über die zweite Schnittstelle in der ersten Zeitperiode gesendet wird; und das Senden, durch das zweite Netzwerkgerät, der Benutzerdaten zu einem Benutzergerät umfasst: Bestimmen der zweiten Zeitperiode gemäß den Informationen der zweiten Zeitperiode; und Senden der Benutzerdaten zum Benutzergerät gemäß der Steuersignalisierung zur zweiten Zeitperiode.

5. Verfahren nach einem der Ansprüche 1-4, wobei das Senden (330), durch das zweite Netzwerkgerät, der Benutzerdaten zu einem Benutzergerät gemäß der Steuersignalisierung umfasst:
nach dem Empfangen, durch das zweite Netzwerkgerät, der Steuersignalisierung, Bestimmen der Benutzerdaten entsprechend den Benutzergerätinformationen gemäß den Benutzergerätinformationen in der Steuersignalisierung, Planen der Benutzerdaten entsprechend den Benutzergerätinformationen, die vom ersten Netzwerkgerät gemäß der Steuersignalisierung erlangt wurden, Erzeugen von Datensignalen unter Verwendung der Benutzerdaten entsprechend den Benutzergerätinformationen und Senden der Datensignale zum Benutzergerät.

6. Netzwerkgerät (80), wobei das Netzwerkgerät ein zweites Netzwerkgerät ist, und umfassend:
eine erste Schnittstelle (801) und eine zweite Schnittstelle (802), wobei die zweite Schnittstelle (802) eine Luftschnittstelle ist;
ein Empfangsmodul (803), das zum Empfangen von Benutzerdaten, die durch ein erstes Netzwerkgerät über die erste Schnittstelle (801) gesendet werden, und Empfangen einer Steuersignalisierung, die durch das erste Netzwerkgerät über die zweite Schnittstelle (802) an das zweite Netzwerkgerät und ein Benutzergerät (1000) gesendet werden, ausgebildet ist, wobei eine Verbindung zwischen dem ersten Netzwerkgerät und dem zweiten Netzwerkgerät "Backhaul" ist und das Empfangsmodul (803) zum Verwenden der Verbindung für einen Empfang von Benutzerdaten auf der ersten Schnittstelle ausgebildet ist;
ein Datenverarbeitungsmodul (804), das zum Erlangen der Steuersignalisierung, die durch das Empfangsmodul (803) empfangen wird, Verwenden der Steuersignalisierung zur Planung einer Ressource und Anweisen eines Sendemoduls (805), die Benutzerdaten, die durch das Empfangsmodul (803) gesendet werden, zum Benutzergerät unter Verwendung der Ressource zu senden, die durch die Steuersignalisierung geplant ist, ausgebildet ist; und
das Sendemodul (805), das zum Senden der Benutzerdaten an das Benutzergerät auf der Ressource, die durch die Steuersignalisierung geplant ist, ausgebildet ist.

7. Netzwerkgerät nach Anspruch 6, wobei
das Empfangsmodul (803) im Speziellen ausgebildet ist, die Benutzerdaten, die durch das erste Netzwerkgerät im (n-M)-ten Übertragungszeitintervall, TTI, gesendet werden, zu empfangen und die Steuersignalisierung im n-ten TTI zu empfangen, und wobei M eine positive ganze Zahl größer oder gleich 1 ist und n eine ganze Zahl ist.

8. Netzwerkgerät nach Anspruch 7, wobei
die erste Schnittstelle (801) eine X2-Schnittstelle ist und M größer als 10 ist.

9. Netzwerkgerät nach einem der Ansprüche 6-8, wobei
das Empfangsmodul (803) ferner zum Empfangen von Intervallinformationen einer ersten Zeitperiode und einer zweiten Zeitperiode ausgebildet ist, die durch das erste Netzwerkgerät gesendet werden, bevor die Steuersignalisierung empfangen wird, die durch das erste Netzwerkgerät gesendet wird; und das Datenverarbeitungsmodul (804) im Speziellen zum Bestimmen der zweiten Zeitperiode gemäß den Intervallinformationen, die durch das Empfangsmodul (803) empfangen werden, und der ersten Zeitperiode ausgebildet ist, und zum Anweisen des Sendemoduls (805), die Benutzerdaten gemäß der Steuersignalisierung in der zweiten Zeitperiode zu senden, wobei die erste Zeitperiode jene ist, wenn das zweite Netzwerkgerät die Steuersignalisierung empfängt; oder
das Empfangsmodul (803) auch zum Empfangen von Informationen einer zweiten Zeitperiode ausgebildet ist, die durch das erste Netzwerkgerät gesendet werden, bevor die Steuersignalisierung empfangen wird, die durch das erste Netzwerkgerät gesendet wird, und das Datenverarbeitungsmodul (804) im Speziellen zum Bestimmen der zweiten Zeitperiode gemäß den Informationen der zweiten Zeitperiode, die durch das Empfangsmodul (803) empfangen werden, ausgebildet ist, und zum Anweisen des Sendemoduls (805), die Benutzerdaten gemäß der Steuersignalisierung in der zweiten Zeitperiode zu senden, wobei die erste Zeitperiode jene ist, wenn das zweite Netzwerkgerät die Steuersignalisierung empfängt.

10. Netzwerkgerät nach einem der Ansprüche 6-9, wobei
das Datenverarbeitungsmodul (804) ferner ausgebildet ist, das Sendemodul (805) anzuweisen, Kapazitätsbestätigungsinformationen zu senden, bevor das Empfangsmodul (803) die Benutzerdaten empfängt, wobei die Kapazitätsbestätigungsinformationen zur Angabe verwendet werden, dass das zweite Netzwerkgerät einen Empfang der Steuersignalisierung von der zweiten Schnittstelle unterstützt;
das Sendemodul (805) ferner ausgebildet ist, die Kapazitätsbestätigungsinformationen zum ersten Netzwerkgerät zu senden.

11. System, umfassend ein Benutzergerät (1000) ein erstes Netzwerkgerät und ein zweites Netzwerkgerät nach einem der Ansprüche 6-10, wobei
das Benutzergerät (1000) umfasst:
ein Steuermodul (1001) das ausgebildet ist, ein Empfangsmodul (1002) zu steuern, eine Steuersignalisierung in einer ersten Zeitperiode zu empfangen und das Empfangsmodul (1002) zu steuern, Benutzerdaten in einer zweiten Zeitperiode zu empfangen; und
das Empfangsmodul (1002), das ausgebildet ist, die Steuersignalisierung zu empfangen, die durch ein erstes Netzwerkgerät in der ersten Zeitperiode gesendet werden, und die Benutzerdaten zu empfangen, die durch ein zweites Netzwerkgerät in der zweiten Zeitperiode gemäß der Steuersignalisierung gesendet werden, wobei die erste Zeitperiode und die zweite Zeitperiode diskontinuierlich sind.

12. System nach Anspruch 11, wobei
das Steuermodul (1001) im Speziellen ausgebildet ist, das Empfangsmodul (1002) zu steuern, die Steuersignalisierung in der ersten Zeitperiode zu empfangen und das Empfangsmodul (1002) zu steuern, die Benutzerdaten in der zweiten Zeitperiode zu empfangen, wobei die erste Zeitperiode und die zweite Zeitperiode im selben Übertragungszeitintervall, TTI, liegen, die erste Zeitperiode und die zweite Zeitperiode durch N_sym Symbole beabstandet sind und N_sym größer oder gleich 1 und kleiner oder gleich 12 ist; oder
das Steuermodul (1001) im Speziellen ausgebildet ist, das Empfangsmodul (1002) zu steuern, die Steuersignalisierung in der ersten Zeitperiode zu empfangen und das Empfangsmodul (1002) zu steuern, die Benutzerdaten in der zweiten Zeitperiode zu empfangen, wobei die erste Zeitperiode und die zweite Zeitperiode in unterschiedlichen Übertragungszeitintervallen, TTI, liegen.

13. System nach Anspruch 12, wobei
das Steuermodul (1001) im Speziellen ausgebildet ist, das Empfangsmodul (1002) zu steuern, die Steuersignalisierung in einer Steuerdomäne eines ersten TTI zu empfangen, in dem sich die erste Zeitperiode befindet, und das Empfangsmodul (1002) zu steuern, die Benutzerdaten in einer Datendomäne eines zweiten TTI zu empfangen, in dem sich die zweite Zeitperiode befindet.

14. System nach einem der Ansprüche 11-13, wobei
das Empfangsmodul (1002) ferner ausgebildet ist, Intervallinformationen der ersten Zeitperiode und der zweiten Zeitperiode zu empfangen, die durch das erste Netzwerkgerät gesendet werden, bevor die Steuersignalisierung empfangen wird, die durch das erste Netzwerkgerät gesendet wird; und das Steuermodul (1001) ausgebildet ist, die zweite Zeitperiode gemäß den Intervallinformationen, die durch das Empfangsmodul (1002) empfangen werden, und der ersten Zeitperiode zu bestimmen; oder.
das Empfangsmodul (1002) ferner ausgebildet ist, Informationen der zweiten Zeitperiode, die durch das erste Netzwerkgerät gesendet werden, zu empfangen, bevor die Steuersignalisierung empfangen wird, die durch das erste Netzwerkgerät gesendet wird; und das Steuermodul (1001) ausgebildet ist, die zweite Zeitperiode gemäß den Informationen der zweiten Zeitperiode zu bestimmen, die durch das Empfangsmodul (1002) empfangen werden.

15. System nach einem der Ansprüche 11-14, wobei
das Empfangsmodul (1002) ferner ausgebildet ist, eine Moduskonfigurationssignalisierung zu empfangen, die vom ersten Netzwerkgerät an das Benutzergerät gesendet wird, bevor die Steuersignalisierung empfangen wird, die durch das erste Netzwerkgerät gesendet wird; und das Steuermodul (1001) ferner ausgebildet ist, das Empfangsmodul (1002) zu steuern, um gemäß der Moduskonfigurationssignalisierung, die durch das Empfangsmodul (1002) empfangen wird, die Steuersignalisierung in der ersten Zeitperiode zu empfangen und die Benutzerdaten in der zweiten Zeitperiode zu empfangen; oder.
das Steuermodul (1001) ferner ausgebildet ist, das Empfangsmodul (1002) zu steuern, um gemäß der Moduskonfigurationssignalisierung, die in der Steuersignalisierung enthalten ist, die Steuersignalisierung in der ersten Zeitperiode zu empfangen und die Benutzerdaten in der zweiten Zeitperiode zu empfangen.

## Revendications

1. Procédé pour envoyer des données, comprenant :
la réception (310), par un deuxième équipement de réseau, de données d'utilisateur envoyées par un premier équipement de réseau au travers d'une première interface, une connexion entre le premier équipement de réseau et le deuxième équipement de réseau étant de raccordement et la connexion étant utilisée pour la transmission de données d'utilisateur sur la première interface ;
la réception (320), par le deuxième équipement de réseau, d'une signalisation de commande envoyée par le premier équipement de réseau au travers d'une deuxième interface, la deuxième interface étant une interface hertzienne ; et
l'envoi (330), par le deuxième équipement de réseau, des données d'utilisateur à un équipement d'utilisateur, UE, conformément à la signalisation de commande, la signalisation de commande étant également reçu par l'UE au travers de la deuxième interface, et la signalisation de commande étant utilisée pour programmer une ressource pour transporter les données d'utilisateur.

2. Procédé selon la revendication 1, dans lequel
la réception (310), par le deuxième équipement de réseau, de données d'utilisateur envoyées par un premier équipement de réseau comprend :
la réception, par le deuxième équipement de réseau, des données d'utilisateur envoyées par le premier équipement de réseau au (n-M)^{e} intervalle de temps de transmission, TTI, M étant un nombre entier positif égal ou supérieur à 1 et n étant un nombre entier ;
et dans lequel
la réception (320), par le deuxième équipement de réseau, d'une signalisation de commande envoyée par le premier équipement de réseau comprend : la réception, par le deuxième équipement de réseau, de la signalisation de commande au n^{e} TTI.

3. Procédé selon la revendication 2, dans lequel la première interface est une interface X2 et M est supérieur à 10.

4. Procédé selon l'une quelconque des revendications 1 à 3, le procédé comprenant en outre,
avant la réception (320), par le deuxième équipement de réseau, d'une signalisation de commande envoyée par le premier équipement de réseau : la réception d'informations d'intervalle d'une première période et d'une deuxième période envoyées par le premier équipement de réseau ; la réception, par le deuxième équipement de réseau, d'une signalisation de commande comprenant : la réception, par le deuxième équipement de réseau, de la signalisation de commande envoyée par le premier équipement de réseau au travers de la deuxième interface à la première période ; et l'envoi, par le deuxième équipement de réseau, des données d'utilisateur à un équipement d'utilisateur comprenant : la détermination de la deuxième période conformément aux informations d'intervalle et à la première période ; et l'envoi des données d'utilisateur à l'équipement d'utilisateur conformément à la signalisation de commande à la deuxième période ; ou
le procédé comprenant en outre, avant la réception (320), par le deuxième équipement de réseau, d'une signalisation de commande envoyée par le premier équipement de réseau : la réception d'informations d'une deuxième période envoyées par le premier équipement de réseau ; la réception, par le deuxième équipement de réseau, de la signalisation de commande comprenant : la réception, par le deuxième équipement de réseau, de la signalisation de commande envoyée par le premier équipement de réseau au travers de la deuxième interface à la première période ; et l'envoi, par le deuxième équipement de réseau, des données d'utilisateur à un équipement d'utilisateur comprenant : la détermination de la deuxième période conformément aux informations de la deuxième période ; et l'envoi des données d'utilisateur à l'équipement d'utilisateur conformément à la signalisation de commande à la deuxième période.

5. Procédé selon l'une quelconque des revendications 1 à 4, dans lequel l'envoi (330), par le deuxième équipement de réseau, des données d'utilisateur à un équipement d'utilisateur conformément à la signalisation de commande comprend :
après la réception, par le deuxième équipement de réseau, de la signalisation de commande, la détermination des données d'utilisateur correspondant aux informations d'équipement d'utilisateur conformément aux informations d'équipement d'utilisateur dans la signalisation de commande, la programmation des données d'utilisateur correspondant aux informations d'équipement d'utilisateur acquises auprès du premier équipement de réseau conformément à la signalisation de commande, la génération de signaux de données en utilisant les données d'utilisateur correspondant aux informations d'équipement d'utilisateur et l'envoi des signaux de données à l'équipement d'utilisateur.

6. Équipement de réseau (80), l'équipement de réseau étant un deuxième équipement de réseau et comprenant :
une première interface (801) et une deuxième interface (802), la deuxième interface (802) étant une interface hertzienne ;
un module de réception (803), adapté pour recevoir des données d'utilisateur envoyées par un premier équipement de réseau au travers de la première interface (801) et recevoir une signalisation de commande envoyée par le premier équipement de réseau au travers de la deuxième interface (802) au deuxième équipement de réseau et à un équipement d'utilisateur (1000), une connexion entre le premier équipement de réseau et le deuxième équipement de réseau étant de raccordement et le module de réception (803) étant adapté pour utiliser la connexion pour la réception de données d'utilisateur sur la première interface ;
un module de traitement de données (804), adapté pour acquérir la signalisation de commande reçue par le module de réception (803), utiliser la signalisation de commande pour programmer une ressource et ordonner à un module d'envoi (805) d'envoyer les données d'utilisateur reçues par le module de réception (803) à l'équipement d'utilisateur en utilisant la ressource programmée par la signalisation de commande ; et
le module d'envoi (805), adapté pour envoyer les données d'utilisateur à l'équipement d'utilisateur sur la ressource programmée par la signalisation de commande.

7. Équipement de réseau selon la revendication 6, dans lequel
le module de réception (803) est spécifiquement adapté pour recevoir les données d'utilisateur envoyées par le premier équipement de réseau au (n-M)^{e} intervalle de temps de transmission, TTI, et recevoir la signalisation de commande au n^{e} TTI, et M étant un nombre entier positif égal ou supérieur à 1 et n étant un nombre entier.

8. Équipement de réseau selon la revendication 7, dans lequel la première interface (801) est une interface X2 et M est supérieur à 10.

9. Équipement de réseau selon l'une quelconque des revendications 6 à 8, dans lequel le module de réception (803) est en outre adapté pour recevoir des informations d'intervalle d'une première période et d'une deuxième période envoyées par le premier équipement de réseau avant la réception de la signalisation de commande envoyée par le premier équipement de réseau ; et le module de traitement de données (804) est spécifiquement adapté pour déterminer la deuxième période conformément aux informations d'intervalle reçues par le module de réception (803) et la première période, et ordonner au module d'envoi (805) d'envoyer les données d'utilisateur conformément à la signalisation de commande à la deuxième période, la première période étant celle à laquelle le deuxième équipement de réseau reçoit la signalisation de commande ; ou
le module de réception (803) est également adapté pour recevoir des informations d'une deuxième période envoyées par le premier équipement de réseau avant la réception de la signalisation de commande envoyée par le premier équipement de réseau ; et le module de traitement de données (804) est spécifiquement adapté pour déterminer la deuxième période conformément aux informations de la deuxième période reçues par le module de réception (803) et ordonner au module d'envoi (805) d'envoyer les données d'utilisateur conformément à la signalisation de commande à la deuxième période, la première période étant celle à laquelle le deuxième équipement de réseau reçoit la signalisation de commande.

10. Équipement de réseau selon l'une quelconque des revendications 6 à 9, dans lequel le module de traitement de données (804) est en outre adapté pour ordonner au module d'envoi (805) d'envoyer des informations de confirmation d'aptitude avant que le module de réception (803) reçoive les données d'utilisateur, les informations de confirmation d'aptitude étant utilisées pour indiquer que le deuxième équipement de réseau prend en charge la réception de la signalisation de commande en provenance de la deuxième interface ;
le module d'envoi (805) est en outre adapté pour envoyer les informations de confirmation d'aptitude au premier équipement de réseau.

11. Système comprenant un équipement d'utilisateur (1000), un premier équipement de réseau et un deuxième équipement de réseau selon l'une quelconque des revendications 6 à 10, dans lequel
l'équipement d'utilisateur (1000) comprend :
un module de commande (1001) adapté pour commander un module de réception (1002) pour recevoir une signalisation de commande à une première période et commander le module de réception (1002) pour recevoir des données d'utilisateur à une deuxième période ; et
le module de réception (1002) adapté pour recevoir la signalisation de commande envoyée par un premier équipement de réseau à la première période et recevoir les données d'utilisateur envoyées par un deuxième équipement de réseau à la deuxième période conformément à la signalisation de commande, la première période et la deuxième période étant discontinues.

12. Système selon la revendication 11, dans lequel
le module de commande (1001) est spécifiquement adapté pour commander le module de réception (1002) pour recevoir la signalisation de commande à la première période et commander le module de réception (1002) pour recevoir les données d'utilisateur à la deuxième période, la première période et la deuxième période se trouvant dans le même intervalle de temps de transmission, TTI, la première période et la deuxième période étant espacées par N_sym symboles, et N_sym étant égal ou supérieur à 1 et inférieur ou égal à 12 ; ou
le module de commande (1001) est spécifiquement adapté pour commander le module de réception (1002) pour recevoir la signalisation de commande à la première période et commander le module de réception (1002) pour recevoir les données d'utilisateur à la deuxième période, la première période et la deuxième période se trouvant dans des intervalles de temps de transmission, TTI, différents.

13. Système selon la revendication 12, dans lequel
le module de commande (1001) est spécifiquement adapté pour commander le module de réception (1002) pour recevoir la signalisation de commande dans un domaine de commande d'un premier TTI dans lequel se trouve la première période, et commander le module de réception (1002) pour recevoir les données d'utilisateur dans un domaine de données d'un deuxième TTI dans lequel se trouve la deuxième période.

14. Système selon l'une quelconque des revendications 11 à 13, dans lequel
le module de réception (1002) est en outre adapté pour recevoir des informations d'intervalle de la première période et de la deuxième période envoyées par le premier équipement de réseau, avant de recevoir la signalisation de commande envoyée par le premier équipement de réseau ; et le module de commande (1001) est adapté pour déterminer la deuxième période conformément aux informations d'intervalle reçues par le module de réception (1002) et la première période ; ou
le module de réception (1002) est en outre adapté pour recevoir des informations de la deuxième période envoyées par le premier équipement de réseau, avant de recevoir la signalisation de commande envoyée par le premier équipement de réseau ; et le module de commande (1001) est adapté pour déterminer la deuxième période conformément aux informations de la deuxième période reçues par le module de réception (1002).

15. Système selon l'une quelconque des revendications 11 à 14, dans lequel
le module de réception (1002) est en outre adapté pour recevoir une signalisation de configuration de mode envoyée par le premier équipement de réseau à l'équipement d'utilisateur, avant de recevoir la signalisation de commande envoyée par le premier équipement de réseau ; et le module de commande (1001) est en outre adapté pour commander le module de réception (1002) pour recevoir la signalisation de commande à la première période et recevoir les données d'utilisateur à la deuxième période conformément à la signalisation de configuration de mode reçue par le module de réception (1002) ; ou
le module de commande (1001) est en outre adapté pour commander le module de réception (1002) pour recevoir la signalisation de commande à la première période et recevoir les données d'utilisateur à la deuxième période conformément à la signalisation de configuration de mode comprise dans la signalisation de commande.
